# EUROPEAN PATENT SPECIFICATION

(11) **EP 1 967 260 B1**
(45) Date of publication and mention of the grant of the patent: **27.03.2019**
(21) Application number: 08250687.4
(22) Date of filing: 28.02.2008
(51) Int. Cl.: B01J 8/00, B01J 8/06

(54) **APPARATUS AND METHOD FOR DISLODGING AND EXTRACTING SOLID MATERIALS FROM TUBES**
VORRICHTUNG UND VERFAHREN ZUR ENTFERNUNG UND EXTRAKTION FESTER MATERIALIEN AUS RÖHREN
APPAREIL ET PROCÉDÉ POUR DÉLOGER ET EXTRAIRE DES MATÉRIAUX SOLIDES DANS DES TUBES

(30) Priority: 01.03.2007 US 904308
(43) Date of publication of application: 10.09.2008
(73) Proprietor: Rohm and Haas Company, Philadelphia, PA 19106-2399 (US)
(72) Inventor: Decourcy, Michael Stanley, Houston Texas 77059 (US); Le, Nam Quoc, Friendswood Texas 77546 (US); Swann, Scott Mark, Deer Park Texas 77536 (US)
(74) Representative: Kent, Venetia Katherine

(56) References cited:
- EP-A- 0 311 712
- WO-A-98/02239
- WO-A-2006/131556
- WO-A-2006/131557
- GB-A- 2 173 122
- US-A- 4 568 029
- US-A- 5 222 533
- US-A- 5 837 062
- US-B1- 6 619 571

## Description

### Field of the Invention

The present invention relates to a method and an apparatus for efficiently dislodging and extracting at least a portion of solid materials from one or more reactor tubes of shell-and-tube reactors, while minimizing damage to the solid materials and leaving at least a portion of the solid materials structurally suitable for re-use. The present invention also relates to a method for monitoring and communicating the status of the tubes during said removal and replacement of the solid materials.

### Background of the Invention

There are situations which, for various reasons, require the removal of solid materials from tubular members without damage to the tubular members or the solid materials.

For example, shell-and-tube heat exchangers are used as reactor vessels for conducting chemical reaction processes. Such reactors, when operated on a commercial scale, typically have a very large number of elongated hollow tubes (e.g., 3,000 to 30,000) which are generally parallel with one another and collectively surrounded by a shell. When used to perform catalytic reactions, each of the tubes typically contains one or more solid catalyst materials, as well as other solids, such as inert material. Each of the tubes is in fluid communication with an inlet and an outlet for the passage of reactants and other process fluids through the tubes (i.e., through the "tube side" of the reactor vessel). Fluid may be circulated through the shell side of the reactor vessel to heat or cool the tubes and their contents during operation, as desired. The shell-and-tube reactor may be vertically-oriented (i.e., with the tubes oriented vertically and the reaction fluids flowing upward or downward through the tube side) or horizontally-oriented (i.e., with the tubes oriented horizontally and the reaction fluids flowing horizontally through the tube side), depending on the desired reactions, the overall process, and the environment in which the reactor is situated.

The catalyst materials are often in particulate form and when more than one catalyst is employed, they may have the same, similar, or different compositions and shapes. They are often deposited or loaded into the reactor tubes, with or without other solid materials, such as inert materials, in longitudinally arranged layers, each of which constitutes a separate region and each of which is known as an active "reaction zone" wherein the desired chemical reaction occurs.

With time and use, the activity, or performance, of the catalyst material decreases, causing a progressive decrease in product yield until it is no longer economically feasible to continue using the catalyst material. At this time, the used catalyst material and any other solids must be removed from the reactor and replaced with a fresh "charge" of new, unused catalyst material and other solids. This requires extraction of the used catalyst, and any other solids, from each and every tube in the reactor. In view of the very large number of reactor tubes in the reactor vessel, the time required to unload the catalyst and other solids from the reactor, and reload the fresh catalyst and solids may be significant, i.e., on the order of days, weeks, or even months, during which time the reactor cannot be operated. Clearly, the longer it takes to extract used catalyst and solids and load fresh catalyst and solids in the tubes, the more production time is lost.

Solid materials, whether catalyst or other, having non-spherical shapes are very often more difficult to remove because the particles of such materials tend to get impacted, and can, and often do, bridge, within the reactor tube and, therefore, must first be dislodged. Solid materials may also undesirably glue, or adhere, to one another, or to the inner walls of the reactor tubes, or both due to carbonaceous deposits or other materials present (e.g., impurities introduced in the reactant streams) or formed (e.g., dimers or polymers) in the reactor during operation. Also, the longer the reactor is operated, the more such solid materials are generated, deposited and wedged, or impacted, in the reactor tube, which of course makes them more difficult to dislodge. Any of these situations will, of course, hinder the extraction of solid materials from the tubes because they have to be first dislodged without damaging the tubes, other parts of the reactor, and any of the solid materials which are intended to be recovered and re-used. The foregoing problems are known to occur, for example but without limitation, during the following types of reactions: oxidation reactions, ammoxidation reactions, decomposition reactions, reduction reactions, and dehydrogenation reactions involving hydrocarbons.

As mentioned, notwithstanding the time pressures involved, the catalyst material must be extracted from the reactor tubes without damaging the tubes, or other parts of the reactor. Additionally, it is economical and, therefore, preferable to separate and re-use at least some of the other solid materials, such as inert material, where possible. However, even where inert materials can be separated from other extracted solid materials, when they are wedged, adhered or bridged in the tubes, the inert materials may be physically damaged or deformed during dislodging to the extent that they are no longer structurally suitable for re-use.

One of the earliest methods, described briefly in US Patent No. 4,701,101, for removing solid materials such as catalyst and other materials from reactor tubes was simply to vacuum them out manually using a tube or conduit connected to a vacuum source, where the tube was inserted and manipulated manually to contact and extract the solids. This patent also briefly discusses covering the ends of the tubes with caps after removal of the solid materials, but prior to filling them with new solid materials, to prevent unwanted materials from getting into the tubes. US Patent No. 4,701,101 also explains that the caps may be marked or color-coded to indicate the remaining empty length of each tube, and whether one or more tubes have been overfilled or underfilled during the refilling process.

Later methods and devices for removing catalyst materials and other solids from vertically-oriented reactor tubes generally involved access and removal of the solids from the bottom ends of the tubes, using fish tapes, and was extremely time-consuming, labor intensive, and unhealthy for operators (see, e.g., US Patent No. 4,994,241). While this method enabled replacement of used catalyst materials and other solids, it also created a large amount of particulate dust which is detrimental to workplace health and safety, and it required workers to labor in awkward and uncomfortable positions for long periods of time. Furthermore, when a reactor comprises multiple reaction zones which differ in the type of catalyst composition they contain, it sometimes happens that one catalyst deactivates at a faster rate than the other and, therefore, must be replaced, while the other catalyst remains sufficiently active to warrant continued use. Unfortunately, use of the bottom-access fish tape method for catalyst replacement in a vertically-oriented reactor necessarily resulted in extraction of all solids from each tube because removal of the bottommost layers eliminated the support which otherwise kept upper layers in place. This means that the remaining useful life of the slower-deactivating catalyst was always wasted because both catalysts would be removed and replaced when the faster-deactivating catalyst was exhausted.

Reactor vessels often have an opening or "manway" for gaining access to the interior of the vessel to allow operators to perform various necessary repair and maintenance tasks. The manway is typically in fluid communication with the tube-side of the tube sheet (for example, in a vertically-oriented reactor, on the side or top of the reactor vessel, above an upper tube sheet to which the tubes are connected), and may be sized and shaped differently according to the particular vessel and environment, typically being at least 24 inches in diameter. Alternatively, the reactor vessel may have a cap, or "head," which is sealably connected to the perimeter of the reactor vessel by any known means including for example, a flanged connection with gaskets, or even by welding. Such a head is removed to expose the tube sheet and tubes for performance of necessary tasks.

More recently-developed devices and methods provide improved efficiency and safety during the catalyst replacement process by accessing the top ends of the reactor tubes through the manway or the flanged head of vertically-oriented shell-and-tube reactor vessels. These improved methods involve use of a closed apparatus to contain the extracted solid materials and one or more axially-movable hollow, hard-tipped lances or conduits for insertion into the tubes to impact and dislodge the solid materials. A vacuum or aspirator is connected to the lances, to apply a pressure differential and extract loosened solid materials from the top of the tubes, instead of from the bottom. However, if the solid materials were wedged, adhered, or bridged in the tubes, such as often occurs over time with continuous operation of the reactor, dislodging the solid materials consumes more time and they are often deformed or destroyed while being dislodged, which renders them unsuitable for re-use, even after separation and cleaning.

For example, U.S. Patent No. 4,568,029 discloses an apparatus and method which facilitates dislodging and extraction of solid materials from the top ends of the reactor tubes of a vertically oriented shell-and-tube reactor vessel. The apparatus has a plurality of hollow pipes attached to a manifold and arranged in a pattern that matches the geometric arrangement of a corresponding plurality of tubes so that multiple parallel-oriented pipes can be extended simultaneously into multiple corresponding tubes. The leading end of each pipe has a cutting element for physically destroying (i.e., impacting, fracturing, pulverizing, or comminuting) solid materials in the tubes that are otherwise difficult to dislodge and extract. The manifold is connected to a vacuum for extraction of the damaged solid materials through the pipe.

Another variation of the top-access lance method is disclosed in U.S. Patent No. 5,222,533, wherein a nozzle is mounted on the distal end of a flexible conduit and inserted into the upper end of a catalyst-filled reactor tube. After insertion into a reactor tube, pressurized fluid (such as air) is discharged from the nozzle for impacting, dislodging and fluidizing solid materials. A vacuum is applied to the reactor tube through a side-opening provided on the tube and a separate conduit connected thereto, for extracting the dislodged solid materials from the tube. This is sometimes referred to as the "air lancing" or "fluid lancing" method of solids removal.

U.S. Patent Nos. 5,228,484 and 6,182,716 involve improvements to the air lancing apparatus and method disclosed in U.S. Patent No. 5,222,533. U.S. Patent Nos. 5,228,484 and 6,182,716 each disclose mechanization of dispensing and retrieval of air lances by attaching flexible conduits, by one end thereof, to lances, and attaching the other end to a rotating drum which winds the flexible conduit around itself as it rotates. In both cases, the air lance is inserted into the upper end of a reactor tube by unwinding the conduit attached to the lance, and a pressurized fluid is delivered through a nozzle at the distal end of the lance to break up and dislodge the solid materials therein. A separate conduit fluidly connected to the lance and to a vacuum source extracts and conveys the solids away from the lance and tube. The disclosure of U.S. Patent No. 6,182,716 teaches an arrangement of electric switches and valves which controls rotation of the drum and provides better control over the positioning and speed of the air lance.

U.S. Patent No. 6,360,786 provides a remotely operable apparatus for removing catalyst from reactor tubes in which a drum and reel assembly with an attached extendable and retractable hose having an air lance at its distal end are passed through a manway and inside a reactor vessel to be aligned with the top opening of a corresponding reactor tube. The remaining apparatus and controls, including a vacuum source and a pressurized fluid supply each connected to the other end of the hose, and a power supply and operational controls connected to the drum and reel assembly, are positioned outside the reactor vessel to provide the means for remote operation of the drum and reel assembly from outside the reactor vessel.

Unfortunately, the air lancing apparatus and methods described above all suffer from the same deficiency - they are ineffective for removing impacted solid materials (i.e., bridged, wedged, glued, adhered, etc., as described hereinabove) because the force they are able to provide for dislodging the solids is limited by the diffuse nature of the fluid stream and is often not enough to dislodge such impacted solid materials.

U.S. Patent No. 6,723,171 discloses a process and an apparatus for extracting a solid material from the tubes of a tube-and shell reactor. This apparatus also has an aspirating tube with a tip attached at one end to be inserted into a reactor tube. The tip has a leading edge which may be sloped to form a cutting wedge, or it may have blunt or pointed projections. Axial force is applied to the tip to physically crush and destroy wedged, bridged or otherwise impacted solid materials, but the tube and tip are not rotatable and cannot provide torsional forces often necessary to dislodge strongly impacted solid materials. The other end of the aspirating tube is connected to an exhaust gas aspirator, for providing a vacuum air stream for fluidizing and extracting the solid material from the tube. A separation device, such as a gravity trap, is attached to the aspirating tube, upstream of the exhaust gas aspirator, for separating extracted solid materials from the air stream. U.S. Patent No. 6,723,171 further discloses a process whereby, after the reactor tubes were filled with layers of catalyst and inert solids (i.e., Raschig rings), but prior to on-line operation of the reactor, a small portion of the Raschig rings were removed from reactor tubes, thereby adjusting the height of that inert layer in the reactor tube before operation. Thus, this technology successfully adjusts the volume (i.e., the length or height) of layers of respective solid materials, during the loading, or "re-packing," of new solids into the tubes and prior to operation. Since the Raschig rings discussed in U.S. Patent No. 6,723,171 were removed shortly after loading, but before operation of the reactor, it is unlikely that the Rachig rings were strongly wedged or impacted in the reactor tubes and, therefore, they were probably relatively easy to dislodge and extract, without serious damage.

A process disclosed in U.S. Patent Application Publication No. 2004/0015013 teaches removal of only a portion of the catalyst, "by suction," from a catalyst-containing reactor tube, leaving the remainder of catalysts and other solids intact and in position in the tube. A particular embodiment of this process is described as taking place in the context of a gas-phase partial oxidation of alkenes which utilizes a vertically-oriented shell-and-tube reactor vessel. This process utilizes apparatus technology analogous to that described hereinabove which employs only a vacuum and, therefore, does not disclose or suggest a method or apparatus for dislodging impacted solid materials, without damage to the reactor tube or the solid materials themselves.

In the foregoing circumstances, there have been constant efforts by industry to minimize catalyst replacement time while avoiding damage to the reactor tubes and extracted solids. Additionally, keeping track of the status of each tube during replacement of one or more solid materials is a serious challenge requiring well-organized tracking procedures which should also be simple in practice. In view of the fact that replacement takes place over a significant period of time, with the involvement of multiple operators, there is also a need for a simple, efficient method for tracking and communicating the status of the tubes as replacement proceeds.

The present invention addresses the aforesaid shortcomings of the prior art by providing a method and an apparatus for dislodging and extracting at least a portion of solid materials from the tubes of a shell-and-tube reactor, without damage to the reactor tubes and with minimal damage to the solid materials so that at least a portion of the extracted solid materials remain structurally suitable for re-use. The present invention provides a simple, efficient method for tracking the status of the tubes as the replacement procedure proceeds.

US 4568029, DE 10353617 and JP-A-61185330 each disclose apparatus for removing solids from a tubular reactor.

### Summary of the Invention

The present invention provides a method for minimizing damage to at least a portion of solid materials during dislodging and extraction of the solid materials from reactor tubes of a shell-and-tube reactor, so that at least a portion of the solid materials remain structurally suitable for re-use after dislodging and extraction. The method of the present invention comprises the steps of axially aligning a hollow rod, having a tip, with a corresponding reactor tube, and positioning the hollow rod such that the tip is proximate to the exposed end of the corresponding reactor tube and then rotating the hollow rod. The rotating hollow rod is inserted into the exposed end of the corresponding reactor tube so that its tip is in physical contact with at least a portion of the solid materials and at least a portion of the solids materials is dislodged by applying a controlled axially-directed force to the rotating hollow rod and controllably pressing the tip of the rotating hollow rod against the solid materials. The combined axially-directed force and the torsion provided by rotation of the rod dislodges even tightly wedged or bridged solid materials while minimizing damage to them so that at least at portion of them remains structurally suitable for re-use after dislodging and extraction. The method further comprises the step of extracting at least a portion of the dislodged solid material from the corresponding reactor tube by aspirating the dislodged solid materials, in a flowing fluid stream, through the hollow rod. During dislodging, the rotating and axially-directed force is monitored and adjusted to minimize damage to at least a portion of the solid materials and ensure their structural suitability for re-use. All or only a portion of the solid materials may be dislodged and extracted from the reactor tubes.

In one embodiment, wherein the reactor tubes are oriented parallel to one another and the exposed ends of the reactor tubes form a regular, repeated pattern, and the hollow rod comprises a plurality of hollow rods, which are arranged parallel to one another and in a configuration that matches the regular, repeated pattern formed by the exposed ends, the positioning step a) further comprises aligning the tip of each of the plurality of hollow rods with the exposed end of a corresponding one of the reactor tubes; and the rotating step b) comprises rotating at least one of the plurality of hollow rods independently of the others.

The method may further comprise separating the solid materials to accomplish at least one goal selected from the group consisting of: separating at least a portion of the solid materials from the flowing fluid stream, separating different types of solid materials from one another, separating different sizes of solid materials from one another, and separating solid materials having different compositions from one another.

The method may further comprise the step of placing indicators on the exposed end of each of the reactor tubes, according to a code, after at least one step of said method is performed for each reactor tube for enabling an operator to determine which step to perform next for each of the reactor tubes

The present invention also provides a device for minimizing damage to solid materials during dislodging and extraction of the solid materials from one or more reactor tubes of a shell-and-tube reactor, where at least a portion of the solid materials is structurally suitable for re-use after dislodging and extraction and each of the reactor tubes has an exposed end connected to a tube sheet. The device comprises a mounting assembly, at least a part of which is adapted to remain stationary relative to the reactor tubes during operation of the device and a carrier movably mounted to the mounting assembly. A hollow rod is connected to the carrier and is sized and shaped for insertion into a corresponding reactor tube. The hollow rod has a tip for contacting and dislodging at least a portion of the solid materials, and an axial lumen for conveying at least a portion of the dislodged solid materials from the corresponding reactor tube. The device further comprises a transmission assembly, which is connected to the mounting assembly and is in communication with a power source and with the carrier, and a rotator assembly mounted to the carrier and in communication with one or more of the hollow rods. The transmission assembly is for applying a controlled axially-directed force to the carrier and moving the carrier and hollow rod, relative to the reactor tubes, between a withdrawn position, in which the tip of the hollow rod is positioned proximate to the exposed end of a corresponding one of the reactor tubes and externally to the corresponding reactor tube, and an inserted position, in which the hollow rod is inserted into the corresponding reactor tube, and wherein the hollow rod is moveable to any one of a plurality of positions intermediate the withdrawn and inserted positions. The rotator assembly is for engaging and rotating the hollow rod, wherein, when the carrier is in its inserted position and the tip of said rotating hollow rod contacts at least a portion of the solid materials in the corresponding reactor tube, the tip impacts and dislodges at least a portion of the solid materials while minimizing damage to the solid materials, at least a portion of which remain structurally suitable for re-use after extraction. The device further comprises means such that, during the dislodging step, the rotation of the hollow rod and application of the axially-directed force are monitored and adjusted to minimize damage to at least a portion of the solid materials and ensure their structural suitability for re-use. The rotator assembly may comprise a motor and said axially-directed force is supplied by said motor.

The device may further comprise an aspirator connected in fluid communication with the axial lumen of the hollow rod for extracting the dislodged solid material from the corresponding reactor tube by providing a flowing fluid stream in which at least a portion of the dislodged
solid material is entrained and conveyed out of the corresponding reactor tube and away from the reactor.

Furthermore, the device may also comprise a separation apparatus for achieving separation of the extracted solid materials from the fluid stream, separation of the different types of solid materials from one another, separation of the different sizes of solid materials from one another, separation of the solid materials having different compositions from one another, and combinations thereof.

In one embodiment, where the reactor tubes are oriented parallel to one another and the exposed ends of the reactor tubes form a regular, repeated pattern, the hollow rod comprises a plurality of rods which are oriented parallel to one another and which are arranged in a configuration that matches the regular, repeated pattern of the reactor tubes. In this embodiment, the rotator assembly may comprise a plurality of rotator assemblies, each of which engages and rotates a corresponding one or more of the hollow rods.

The present invention also provides a method for tracking and communicating the status of an in-progress process comprising the above-described method of the present invention for minimizing damage to at least a portion of solid materials during dislodging and extraction of the solid materials from reactor tubes, said in-progress process having at least two steps which are performed sequentially, which comprises: providing a code having a plurality of code members and associating a code member with each step of the in-progress process. The method further comprises providing a plurality of indicators each of which bears a code member and is sized and shaped to cooperate with an end of a corresponding tube to form a moisture-resistant seal therewith and, finally, communicating to operators which step has been most recently completed for each tube by positioning an indicator bearing the code member associated with the most recently completed step on the exposed end of the tube. In one embodiment, the plurality of code members is selected from the group consisting of: colors, markings, numbers, symbols, and combinations thereof.

### Brief Description of the Drawings

A more complete understanding of the present invention will be gained from the embodiments discussed hereinafter and with reference to the accompanying drawings, in which like reference numbers indicate like features, and wherein:
Figure 1A is a schematic representation of the relative arrangement of apparatus achieved by the first few steps of the method of the present invention, including a partial cut-away elevational side view of a reactor having a plurality of reactor tubes and a rod suitable for use with the inventive method;
Figure 1B is an enlarged schematic elevational side view of a portion (W) of the apparatus of Figure 1A, showing the tip of the rotating hollow rod in physical contact with at least a portion of solid materials in a reactor tube;
Figure 1C is another elevational side view of the apparatus of Figure 1B showing the configuration of apparatus during performance of further steps of the method of the present invention;
Figure 2 is a schematic top plan view of the reactor showing the first tube sheet, as viewed from above, and the regular, repeated pattern (P) formed by the exposed ends of the reactor tubes;
Figure 3 is a schematic cross-sectional elevational side view, taken along line A-A and looking in the direction of the arrows, of a portion of the reactor shown in Figure 2 and showing the relative arrangement of apparatus achieved by the first few steps of an alternative embodiment of the method of the present invention for dislodging and extracting solids from a plurality of reactor tubes, which is applicable when the exposed ends of the reactor tubes form a regular, repeated pattern;
Figure 4 is a schematic diagram of an embodiment of the method of the present invention which further includes conveying, separating and collecting the extracted solid materials;
Figure 5 is a schematic representation of the relative arrangement of apparatus during performance of another embodiment of the method of the present invention which is applied to a horizontally-oriented shell-and-tube reactor, which is shown in an elevational side view;
Figure 6 is an enlarged, partially cut away, schematic side view of the arrangement of apparatus during performance of an embodiment of the method of the present invention for removal of less than all of the solid material from reactor tubes which contain a plurality of solid materials arranged to form a plurality reaction zones;
Figure 7 is a schematic elevational front view of an apparatus in accordance with the present invention, which is in use with a reactor shown in a partial cross-sectional cut-away view and containing solid materials to be dislodged and extracted;
Figures 7A-7F are perspective views showing examples of various possible suitable shapes and structures for the tips of the hollow rods of the apparatus;
Figure 8 is a schematic elevational left side view of the apparatus and reactor of Figure 7, where the right side view of same is a mirror image of that provided in Figure 8;
Figure 9 is a schematic elevational front view of the apparatus and reactor of Figure 7, showing the carrier and hollow rods of the apparatus in a withdrawn position;
Figure 10 is a schematic elevational front view of the apparatus and reactor of Figure 7, showing the carrier and hollow rods of the apparatus in an extended position;
Figure 11 is a front perspective view of a more detailed embodiment of the apparatus of the present invention;
Figure 12 is a side perspective view of the apparatus of Figure 11;
Figure 13 is an elevational left side view of a type of rotator assembly used in the apparatus of Figures 11-12;
Figure 14 is an elevational front view of the rotator assembly of Figure 13, the right side view being a mirror image of this left side embodiment;
Figure 15 is an elevational right side cut-away view of the rotator assembly of Figure 14, taken along the line B-B and facing in the direction of the arrows.

### Detailed Description of the Invention

The method and apparatus of the present invention minimizes damage to solid materials, during dislodging and extraction of at least a portion of them from tubular members, such as the reactor tubes of shell-and-tube reactors, so that at least a portion of the extracted solid materials remain structurally suitable for re-use. The present invention also provides a method which facilitates monitoring and communicating the status of each tube during dislodging, removing, and replacing at least a portion of solid materials from reactor tubes.

The following definitions are provided to facilitate description of the present invention and clarify the terminology used hereinafter.

As used herein, the term "C₂ to C₅ alkane" means a straight chain or branched chain alkane, having from 2 to 5 carbons atoms per alkane molecule, for example, ethane, propane, butane and pentane. The term "C₂ to C₅ alkene" means a straight chain or branched chain alkene having from 2 to 5 carbons atoms per alkene molecule, for example, ethene, propene, butene and pentene. As used herein, the term "a mixture of a C₂ to C₅ alkene with its corresponding C₂ to C₅ alkene" includes both of the aforesaid alkanes and alkenes, such as, without limitation, a mixture of propane and propene, or a mixture of n-butane and n-butene.

An "inert" material is a material which does not participate in, is unaffected by, and/or is inactive relative to a particular reaction. For example, propane (C₃H₈) and nitrogen are each considered to be inert in reactions that produce unsaturated aldehydes and acids, such as (meth)acrolein and/or (meth)acrylic acid, from propylene by a two-stage vapor phase catalytic oxidation process (which is described in further detail hereinafter).

The term "(meth)acrylic acid" encompasses both acrylic acid and (meth)acrylic acid. The term "acrylic acid" encompasses "(meth)acrylic acid" and related/like compounds. The term "(meth)acrylonitrile" encompasses acrylonitrile and methacrylonitrile and the reverse is also true. The term "(methyl)styrene" encompasses both styrene and methylstyrene and the reverse is also true.

The term "reaction zone" is used herein to mean a region or volume, typically disposed in a reactor, where a particular reaction (such as, dehydrogenation of an alkane, or partial oxidation of acrolein to form acrylic acid) occurs and which is often operated under conditions (temperature, pressure, etc.) favorable to that reaction.

The term "sub-zones" refers to two or more regions in the same reaction zone in which the same reactants are converted to the same or similar products, but the sub-zones are otherwise somehow different from one another. The sub-zones may differ, for example, without limitation, in any of the following ways: they contain different catalyst compositions which catalyze the same or similar reaction mechanisms to produce the same products from the same reactants, or they contain different concentrations of the same catalyst composition, or they are operated at different temperatures or pressures, or the regions may comprise physically separate regions (separated, for example, by a layer containing inert solid materials), or combinations of these differences, as known and practiced in the art by skilled persons to enhance process efficiency and productivity. It is noted that different catalyst concentrations may, for example, be obtained by combining the catalyst with a support or carrier substrate, or by simply physically mixing the catalyst, in the desired proportion, before loading into the tubes, with support or carrier materials that may or may not bond with the catalyst material, and which may or may not be themselves catalytically active.

A "reaction stage" is a region comprising one or more reaction zones in which a particular reaction, such as the dehydrogenation of an alkane to produce the corresponding alkene, occurs in each and every active reaction zone and sub-zone of that reaction stage to convert the same reactants to the same or similar products. Furthermore, where two or more different reaction stages are operated together, in series or in some other arrangement, they may, collectively, form a single overall "multistage" reaction process. For example, the partial oxidation of propylene to form acrolein (a first reaction) may be carried out in a first reaction stage comprising one or more reaction zones, and the partial oxidation of acrolein to form acrylic acid (a different, second reaction) may be carried out in a second reaction stage also comprising one or more reaction zones. The first and second reaction stages may be referred to, collectively, as a multistage reaction process for the partial oxidation of propylene to acrylic acid. As a further example, a multistage reaction process having three reaction stages and utilizing propane as the initial raw material may be arranged as follows: a first reaction stage comprising one or more reaction zones, within which propane is first converted to propene (a first reaction), followed by a second reaction stage having one or more reaction zones wherein the propene from the first stage is converted to acrolein (a second reaction), and then a third reaction stage comprising one or more reaction zones wherein the acrolein from the second stage is converted to acrylic acid.

The terms "reaction zone" and "reaction stage" are not synonymous. One or more reaction zones which produce the same or similar product from the same reactants, but which differ in other ways discussed above, may be disposed in a single reaction stage, and so, may be collectively referred to as a single reaction stage. However, it is clear that a single reaction zone may be, but is not necessarily, coextensive with a particular reaction, since it may be only one of a plurality of zones in that stage. Thus, a reaction stage may comprise one or more reaction zones (and sub-zones), and a reaction zone may form a single reaction stage, but not necessarily, and a reaction zone will never comprise more than one reaction stage.

The "first reaction stage" (or "first stage") is the region within a reactor where the first step of a multi-step vapor phase catalytic oxidation reaction occurs. For example, in the two-step vapor phase catalytic oxidation of propylene to acrylic acid, the oxidation of propylene to acrolein typically occurs primarily in the first reaction stage.

The "second reaction stage" (or "second stage") is the region within a reactor where the second step of a multi-step vapor phase catalytic oxidation reaction occurs. For example, in the two-step vapor phase catalytic oxidation of propylene to acrylic acid, the oxidation of acrolein to acrylic acid typically occurs primarily in the second reaction stage.

It is of course possible to have a "third reaction stage," such as, for example, in a three-step reaction process for conversion of propane to acrylic acid, wherein propane is converted to propene in a first stage, the propene is converted to acrolein in a second stage and the acrolein would be converted to acrylic acid in a third stage. As described, each reaction stage may have one or more reaction zones.

An "inert stage", is used herein to mean a reaction stage comprising one or more inert solid materials and in which no appreciable reaction occurs. Inert stages may perform any number of functions and benefits including, but not limited to: cooling, heating, buffering, and forming an inert region in the reactor for physically capturing and retaining substances that tend to migrate out of their original reaction stage or zone.

A "packing schedule," as this term is used herein, is the detailed description of the number and length of reaction zones of catalyst and zones of inert material (e.g., interstage, or preheat zone), as well as the relative amount and type of catalyst in each zone (e.g., as a percentage vs. diluent in the zone's specific mixture) of a reaction system. The packing schedule determines, among other things, the number and volume of the reaction zones in a particular reactor, as well as the relative activities of each such reaction zone.

A "single reactor shell" reactor ("SRS" reactor), is a reactor in which a single reactor vessel contains at least two reaction stages, such as a first stage and a second stage as defined above, which are typically separated by a perforated partition plate.

A "tandem reaction" system is a reaction system employing more than one reactor vessel. For example, without limitation, a tandem reaction system may comprise two vessels connected in series, one comprising a first stage and the other comprising a second stage. More particularly, a tandem reactor system intended to perform two-step vapor phase catalytic oxidation may have a first reaction vessel including a first reaction stage and a second reactor vessel including a second reaction stage in series with, and downstream of, the first reactor vessel. In other embodiments, each reactor of a tandem reactor system may contain more than one reaction stage, more than one active reaction zone, and may also include inert stages where no active catalyst is present. Additionally, tandem reaction systems lend themselves easily to the installation and use of additional process apparatus positioned intermediate reactor vessels, such as, for example, a heat exchanger, a compressor, or a pump.

The term "catalyst service life" (or simply "service life"), as used herein, refers to the length of time that a given catalyst may be economically used in a process before it requires replacement. This evaluation is based on various factors, including, but not limited to, the cost of catalyst, the minimum desired product yield, product demand, as well as other market factors familiar to persons of ordinary skill in the art. Commercial catalyst supplier will often provide an estimated catalyst service life for a particular catalyst which is calculated based on the type of reaction and reaction conditions in which the catalyst is expected to be used.

The term "time on stream" ("TOS") means the number of operating-service hours that a catalyst has experienced. The TOS of a catalyst is a measure of the total cumulative hours that the catalyst has spent in operational service, including start-up, normal operations, shut-down, purging, regeneration, and may also include periods where the catalyst is not actually catalyzing a reaction.

Atoms of elements herein are referred to by atomic number, atom name, IUPAC symbol, periodic table of the elements group identification and/or symbol, common group name, group number, group roman numeral symbol, common name and any equivalent or synonymous representations, known to one having ordinary skill in the art.

Exemplary embodiments of the method and apparatus of the present invention will now be described, including a generic embodiment of the method, a more specific embodiment applied in a more specific environment, as well as a generic embodiment of the apparatus and a more specific embodiment of the apparatus.

Although the more specific embodiments of the present invention will be described in the context of the extraction and replacement of solid materials from the tubes of a shell-and-tube reactor containing at least two catalyst compositions and adapted for two stage catalytic oxidation of a C₂ to C₅ alkene, it is not intended that the present invention be limited to this particular reaction process or apparatus. Rather, it is contemplated that the method and apparatus of the present invention could be successfully applied by persons of ordinary skill to other configurations of shell-and-tube reactors, including those in which the reactor is used to perform reactions other than catalytic oxidation of C₂ to C₅ alkenes. Furthermore, the present invention can be adapted and applied to a variety of other reaction processes and apparatus in which the need arises to dislodge and extract solids from tubular members, based on the following detailed disclosure and the knowledge generally available in the relevant arts.

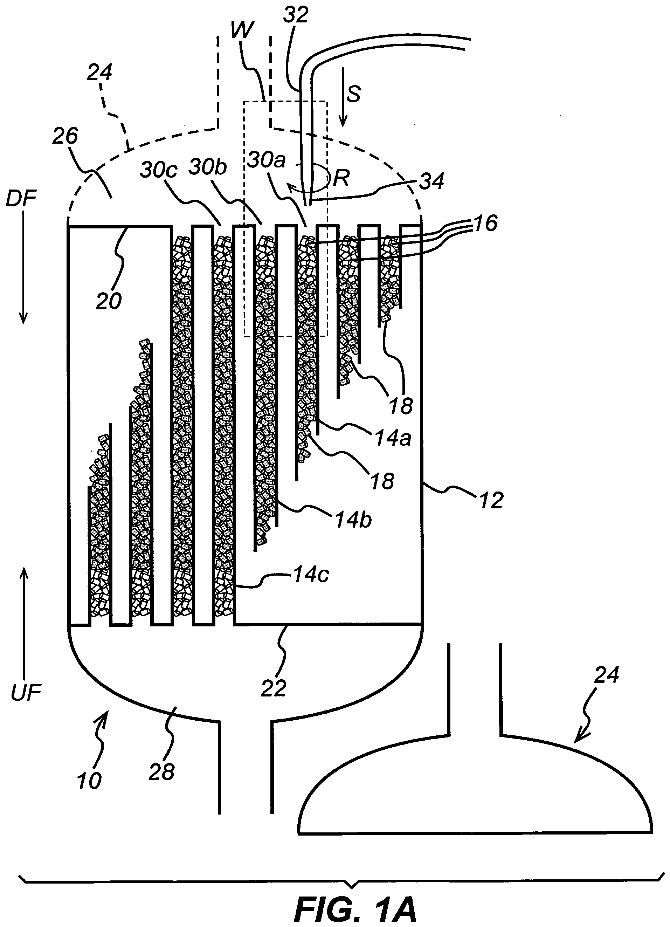

The steps of one exemplary, generic embodiment of the method of the present invention for dislodging and extracting solid materials from tubular members will now be described in detail with reference to Figures 1A-1C Although one or more of the steps of the inventive method may be performed simultaneously, or during partially overlapping periods of time (which is most likely as performed in practice), the following discussion describes the steps sequentially to facilitate communication and understanding of each step independently of the others.

Figure 1A provides a schematic side view of the relative arrangement of apparatus achieved by the first few steps of the method of the present invention. More particularly, Figure 1A provides a schematic cut-away elevational side view of a typical shell-and-tube reactor 10, to which the method of the present invention would be applicable, as well as a hollow rod, which will be described in further detail hereinafter. The reactor 10 has a shell 12 which surrounds a plurality of tubular members, such as the plurality of reactor tubes 14a, 14b, 14c shown in Figure 1A. The reactor tubes 14a, 14b, 14c are oriented parallel with one another and have solid materials 16, 18 disposed therein. As shown, the reactor 10 has a first perforated tube sheet 20 to which an end of each of the reactor tubes 14a, 14b, 14c is attached. The opposite end of each of the reactor tubes 14a, 14b, 14c is attached to a second perforated tube sheet 22.

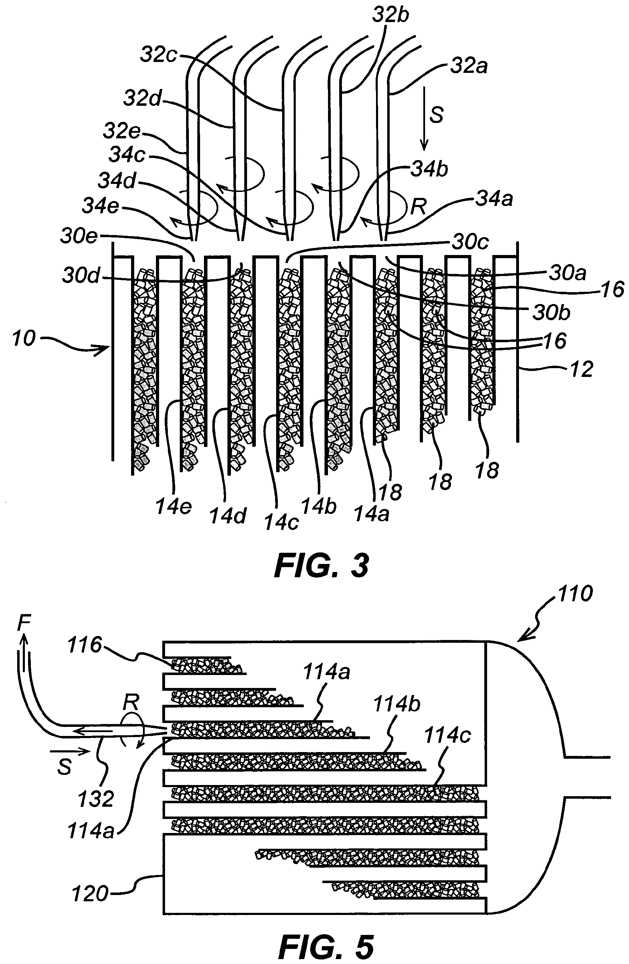

The reactor 10 is shown in Figure 1A positioned vertically and, therefore, the reactor tubes 14a, 14b, 14c are also vertically oriented. Of course, the reactor 10 may be positioned in any other desired orientation, such as horizontally, or even at an angle relative to a horizontal plane (see, e.g. Figure 5).

As shown in phantom in Figure 1A, during operation of the reactor 10, a removable flanged cap, or "reactor head" 24, is sealingly affixed to the perimeter of the reactor 10 proximate the first tube sheet 20, to form a first tube-side chamber 26 which is in fluid connection with the reactor tubes 14a, 14b, 14c to allow reactants (not shown) and other fluids to flow through the reactor tubes 14a, 14b, 14c. When it is desired to extract solid materials 16, 18 from the reactor tubes 14a, 14b, 14c, the reactor 10 is shut down and the reactor head 24 is unsealed and removed to provide access to the first tube sheet 20 and expose the ends 30a, 30b, 30c of the reactor tubes 14a, 14b, 14c. Removal of the reactor head 24 of a large commercially-operated reactor typically requires cranes or other large apparatus. To protect the reactor 10 and any operators from harm or damage from exposure to wind and weather while the reactor head 24 is not shielding the reactor 10, it is recommended to cover or shield the reactor 10 (e.g., at least the first tube sheet 20 and the exposed ends 30a, 30b, 30c of the reactor tubes 14a, 14b, 14c) by placing a temporary cover or housing (not shown) over the reactor 10.

In addition to the first tube-side chamber 26, the reactor also has a second tube-side chamber 28, formed between the shell 12 and the second perforated tube sheet 22. The second tube-side chamber 28 is also in fluid communication with the reactor tubes 14a, 14b, 14c to allow reactants (not shown) and other fluids to flow therethrough. One or more reactants (not shown) may flow in either direction through the reactor tubes 14a, 14b, 14c, during operation of the reactor 10 to be converted therein to one or more products (not shown). For example, when the reactor 10 is oriented vertically, as in Figures 1A-1C, the process fluids may exhibit a "downflow" process configuration, or an "upflow" process configuration. A "downflow" process configuration is where reactants flow downward (in direction of the arrow **DF**), through the first tube-side chamber 26, the reactor tubes 14a, 14b, 14c from top to bottom, and then through the second tube-side chamber 28. Alternatively, an "upflow" process configuration occurs when reactants flow upward (in direction of the arrow **UF**), i.e., first through the second tube-side chamber 28, then through the reactor tubes 14a, 14b, 14c from bottom to top, and finally through the first tube-side chamber 26. The method of the present invention is applicable to either configuration, and is particularly advantageous when the solid materials to be dislodged and extracted are located proximate to the exposed ends 30a, 30b, 30c of the reactor tubes 14a, 14b, 14c, and when it is desired to remove only the portion of the solid materials proximate to the exposed ends 30a, 30b, 30c.

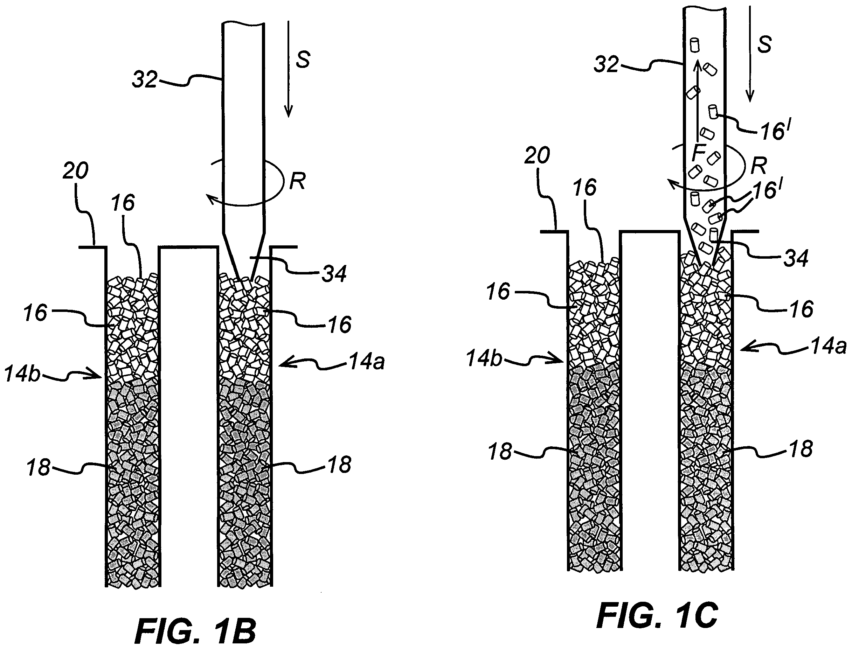

The relative configuration of apparatus achieved by the first few steps of the method of the present invention is shown in Figure 1A. In particular, the first step comprises axially aligning a hollow rod 32 with a corresponding reactor tube 14a, and positioning the hollow rod 32 such that its tip 34 is proximate to the exposed end 30a of the corresponding reactor tube 14a. Next, the hollow rod 32 is rotated (in the direction shown by the arrow **R**) and then it is axially (in the direction shown by the arrow S) inserted, while rotating, into the exposed end 30a of the corresponding reactor tube 14a. The portion of Figure 1A indicated by window W is enlarged in Figure 1B, to show that the rotating hollow rod 32 is inserted so that its tip 34 is in physical contact with at least a portion of the solid materials 16 in the corresponding reactor tube 14a.

The same apparatus as in Figure 1B is shown schematically in Figure 1C to provide a schematic elevational side view of the arrangement of apparatus during performance of further steps of the method of the present invention. After insertion of the rotating hollow rod 32 into the corresponding reactor tube 14a, at least a portion of the solid material 16, 18 is dislodged and extracted as follows. At least a portion of the solid materials 16 18 is dislodged by applying a controlled axially-directed force (in the direction of arrow **S**) to the rotating hollow rod 32 and controllably pressing the tip 34 against the solid materials 16 first encountered in the reactor tube 14a. As individual particles of the solid material 16 are dislodged, continued controlled application of the axially-directed force in the direction of arrow **S** steadily urges the rotating hollow rod 32 deeper into the corresponding reactor tube 14a for dislodging more of the solid material 16. As shown in Figure 1C, the uppermost solid materials 16 are loosened and dislodged sufficiently for the next step, which is extracting at least a portion of the dislodged solid material 16 from the corresponding reactor tube 14a by aspirating the dislodged solid materials 16, in a flowing fluid stream (shown schematically as arrows **F**), through the rotating hollow rod 32. The axially-directed force **S** is applied in a controlled manner to minimize damage to the solid materials 16 and the reactor tube 14a. During the dislodging step, the rotation of the hollow rod 32 and application of the axially-directed force **S** are monitored and adjusted to minimize damage to at least a portion of the solid materials and ensure their structural suitability for re-use. The application of axially-directed force **S,** along with the torque provided by rotation R of the rod 32, in accordance with the present invention, is significantly more effective and efficient at dislodging impacted solid materials than methods and apparatus which apply axially-directed force alone, or the force provided by air lancing apparatus and methods. Additionally, controlling and modifying the rotational movement which creates the torque, as well as the axially-directed movement of the rod 32, during operation, facilitates avoidance of damage to the reactor tube 14. It is well within the ability of persons of ordinary skill in the relevant art to empirically determine the maximum shear strength permitted for any combination of rotating hollow rod and reactor tube and, thereby, provide maximum operating standards to avoid such damage to the tubes.

Another weakness of previously existing methods and devices for removing solids from tubular members relates to the fact that often only gravitational forces are employed to apply axially-directed forces on the lances or rods, without any other force applied to supplement gravity which might otherwise assist in dislodging particularly tightly wedged solids. In the method of the present invention, the axially-directed force S may comprise a non-gravitational force, i.e., a force in addition to any axially-directed gravitational forces which may be exerted on the rotating hollow rod 32, so that the total axial force S applied to the rod 32 is controllable and may be greater than the standard gravitational force. Additionally, the axial movement of the rod 32 is monitored and controllable so that, when gravity exerts an axially-directed force that is deemed too great, the non-gravitational force may be directed in an axial direction which is opposite the direction of gravity, so that the total axially-directed force **S** delivered to the rod 32 and applied to impacted solid materials in the reactor tube 14a, is less than the gravitational force. This will avoid damage to the reactor tube 14a and the solid materials when less than gravitational force is sufficient to dislodge the solid materials. The non-gravitational force may be provided by any means devisable by skilled persons, for example, but not limited to, a mechanical drive or transmission device, or manually by an operator. Where the reactor vessel is oriented horizontally (see, e.g., Figure 5), gravitational forces will contribute negligible axially-directed force to the axial movement of the rod 32 (132 in Figure 5) and, therefore, application of non-gravitational force will be required.

As will be apparent to persons of ordinary skill, once the inventive method is commenced by performing the above-recited steps, a number of steps may be performed continuously and simultaneously until such time as the operator determines that enough solid materials have been removed from the tube. For example, without limitation, the steps of (1) rotating the hollow rod 32, (2) dislodging at least a portion of the solid materials 16 by applying a controlled axially-directed force **S,** and (3) extracting at least a portion of the dislodged solid materials 16 from the tube 14a by aspirating the dislodged solid materials 16, may be performed continuously and simultaneously, until all of the solid materials 16, 18 are removed, or until a portion of the solid materials 16 is removed as desired by the operator.

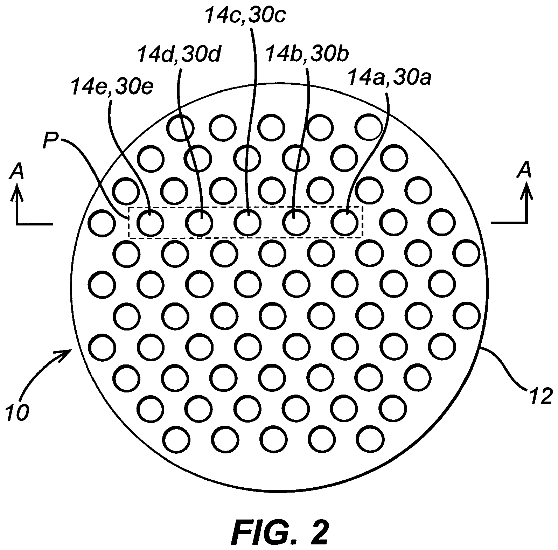

With reference now to Figures 2 and 3, another embodiment of the method of the present invention will be described which is useful to dislodge and extract solid materials simultaneously from a plurality of reactor tubes. As shown by the schematic top plan view of the reactor 10 Figure 2, the first tube sheet 20 and the reactor tubes 14a, 14b, 14c, 14d, 14e may be arranged so that the exposed ends 30a, 30b, 30c, 30d, 30e of the reactor tubes 14a, 14b, 14c, 14d, 14e form a regular, repeated pattern (indicated by window **P**). The first few steps of this embodiment are shown in Figure 3, which provides a schematic cross-sectional elevational side view of a portion of the reactor 10 shown in Figure 2, taken along line **A-A** and looking in the direction of the arrows.

In Figure 3, a plurality of hollow rods 32a, 32b, 32c, 32d, 32e are arranged parallel with one another, in an arrangement that matches the regular, repeated pattern **P** formed by the exposed ends 30a, 30b, 30c, 30d, 30e of the reactor tubes 14a, 14b, 14c, 14d, 14e. In this embodiment of the method, the tip 34a, 34b, 34c, 34d, 34e of each of the hollow rods 32a, 32b, 32c, 32d, 32e is aligned with the exposed end 30a, 30b, 30c, 30d, 30e of a corresponding one of the reactor tubes 14a, 14b, 14c, 14d, 14e, respectively. After alignment, at least one of the plurality of hollow rods 32a, 32b, 32c, 32d, 32e is rotated, independently of the others. For example, each rod 14a, 14b, 14c, 14d, 14e may be independently rotatable, such that it is possible to rotate one rod 32a (or more, e.g., rods 32a and 32c) at one time, while the remaining four 32b, 32c, 32d, 32e (or three rods 32b, 32d, 32e) do not rotate, or rotate at different rates. As will be described in further detail hereinafter, the ability to rotate the hollow rods 32a, 32b, 32c, 32d, 32e independently of one another enables each of them to independently adjust and adapt to the conditions encountered in each of the corresponding reactor tubes 14a, 14b, 14c, 14d, 14e.

Each of the hollow rods 32a, 32b, 32c, 32d, 32e, one or more of which may be rotating, is then inserted into a corresponding one of the reactor tubes 14a, 14b, 14c, 14d, 14e, respectively by applying an axially-directed force in the direction of arrow **S.** The axially-directed force **S** may be applied independently to each rod 32a, 32b, 32c, 32d, 32e, so that each rod 32a, 32b, 32c, 32d, 32e may be inserted into its corresponding reactor tube 14a, 14b, 14c, 14d, 14e independently of the others. The rods 32a, 32b, 32c, 32d, 32e may also be inserted together with one another by applying an axially-directed force to all of the hollow rods 32a, 32b, 32c, 32d, 32e, collectively. For example, the hollow rods 32a, 32b, 32c, 32d, 32e may all be mounted or carried on a carriage which is movable in the axial direction so that when the carriage is moved, each of the rods 32a, 32b, 32c, 32d, 32e may be rotated and inserted into a corresponding reactor tube 32a, 32b, 32c, 32d, 32e simultaneously. Of course, insertion of the hollow rods 32a, 32b, 32c, 32d, 32e into the corresponding reactor tubes 14a, 14b, 14c, 14d, 14e, is followed by dislodging and extracting at least a portion of the solid material 16, as discussed hereinabove, except that a plurality of hollow rods 32a, 32b, 32c, 32d, 32e is used.

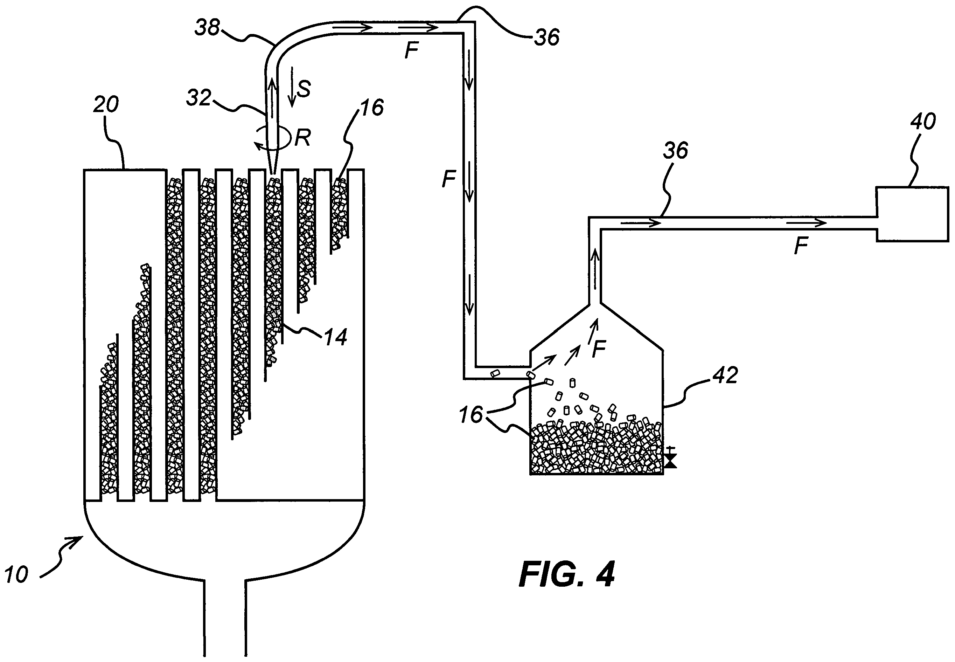

With reference now to Figure 4, the method of the present invention may further involve conveying the extracted solid material 16 away from the reactor 10. Conveyance of the extracted solid materials 16 may be accomplished in any way known to those of ordinary skill in the art. For example, without limitation, where the extracted solids 16 have been aspirated from the reactor tube 14a in a flowing fluid stream **F** as described above, a conduit 36 in fluid communication with the hollow rod 32 may be employed to convey the flowing fluid stream **F** and extracted solid material 16, away from the reactor 10. As shown in Figure 4, the conduit 36 has a first end 38 connected to, and in fluid communication with, the hollow rod 32. The conduit 36 is also in fluid communication with a vacuum source, such as an aspirator 40 (shown schematically). The vacuum source may be any conventional apparatus known in the art to be suitable for aspirating fluids, such as a vacuum pump, or steam jet eductor. Furthermore, where an embodiment of the inventive method employs a plurality of hollow rods 32a, 32b, 32c, 32d, 32e, as shown in Figure 3, each rod 32a, 32b, 32c, 32d, 32e may be independently connected to a corresponding one of a plurality of aspirators (not shown), or, more efficiently, one or more of the rods 32a, 32b, 32c, 32d, 32e may be collectively connected to one or more aspirators (not shown).

In a further step of the method of the present invention, after extraction, the solid materials 16, 18 may be separated from the fluid stream **F,** as well as from one another, by any means known to persons of ordinary skill, such as, without limitation, using gravitational forces, centrifugal forces or even inertia. The separation may be performed for any one or more of the following purposes or goals: separating at least a portion of the solid materials from the flowing fluid stream, separating different types of solid materials from one another, separating different sizes of solid materials from one another, separating solid materials having different compositions from one another, as well as other purposes.

In one embodiment shown in Figure 4, for example, a collection apparatus, such as a container 42 or other vessel, is in fluid communication with the conduit 36, intermediate the end 38 attached to the hollow rod 32 and the aspirator 40, for catching solid material 16 as it separates from the flowing fluid stream **F** due to gravitational forces. Baffles (not shown) may be employed to facilitate gravitational and inertial separation of the extracted solids 16 from the flowing fluid stream **F.** Additionally, the velocity of the flowing fluid stream **F** may also be controlled and manipulated by providing a tortuous path in the conduit 36, or adjusting the aspiration rate, so that the velocity is at a rate which facilitates the gravitational and inertial separation of the extracted solids 16 from the flowing fluid stream **F.** A tortuous path may be created in the conduit 36 by including one or more baffles, elbow turns, or even valves, in the conduit 36.

Furthermore, additional apparatus may be employed to facilitate separation of the solid materials 16 by type or size. For instance, one or more filters with suitable mesh opening sizes may be employed (e.g., positioned proximate to, or in, the container 42 or the conduit 36) to separate the solid materials by size, or magnets of predetermined magnetic field strength may be employed (e.g., positioned proximate to, or in, the container 42 or the conduit 36) to separate solid material containing ferrous metal from that which does not. A filter (not shown) may be positioned proximate the inlet of the aspirator 40 to minimize the dust and particulates which may otherwise enter the aspirator apparatus and interfere with its continued operation.

Another example of separation of solids by size or mass, which is not shown but will be described here, is to control the flow rate of the flowing fluid stream **F** by adjusting the rate of aspiration, and arrange a plurality of collection apparati in series to catch solid materials of varying average mass as they drop out of the stream **F.** The solid material which first separates from the fluid stream **F** (i.e., farthest upstream) may be that which has the greatest mass, and then the next least mass, and so on, until the solid material with the least mass which is to be separated and collected falls out of the fluid stream **F** and into a container (not shown). Alternatively, flow rate of the fluid stream **F** may be adjusted so that the solid material with the least mass drops out first (farthest upstream), and so on until the greatest mass solids to be recovered are separated and collected.

As discussed above, although the method of the present invention has been described and shown thus far as applied to a reactor 10 and its reactor tubes 14a, 14b, 14c which are in a vertical orientation, it is possible to apply the inventive method to a shell-and-tube reactor which is positioned in another orientation, such as horizontally, or even at an angle relative to a horizontal plane. Figure 5 provides a schematic partially cut-away elevational side view of a horizontally-oriented shell-and-tube reactor 110 having a plurality of reactor tubes 114a, 114b, 114c which are connected to a first perforated tube sheet 120 and which can be exposed to permit access to the solid material 116 therein. According to the method of the present invention, a hollow rod 132 axially aligned with the exposed end 130a of a corresponding reactor tube 114a. The hollow rod 132 is then rotated in the direction shown by the arrow **R,** and inserted axially, in the direction shown by arrow **S,** into a reactor tube 114a to dislodge and extract at least a portion of the solid material 116 in the tube 114a. As with previously described embodiments, the extracted solid materials may be conveyed away from the reactor 110 by any suitable means, such as a conduit (not shown) and, furthermore, the solid materials 116 may be recovered by separation and collection, as above, by any suitable means known in the art. Separation and collection of the extracted solid materials may be accomplished by, for example, without limitation, screening, buoyancy separations, centrifuging, employing magnetic or other electrostatic forces, washing, steaming, chemical dissolution and oxidation.

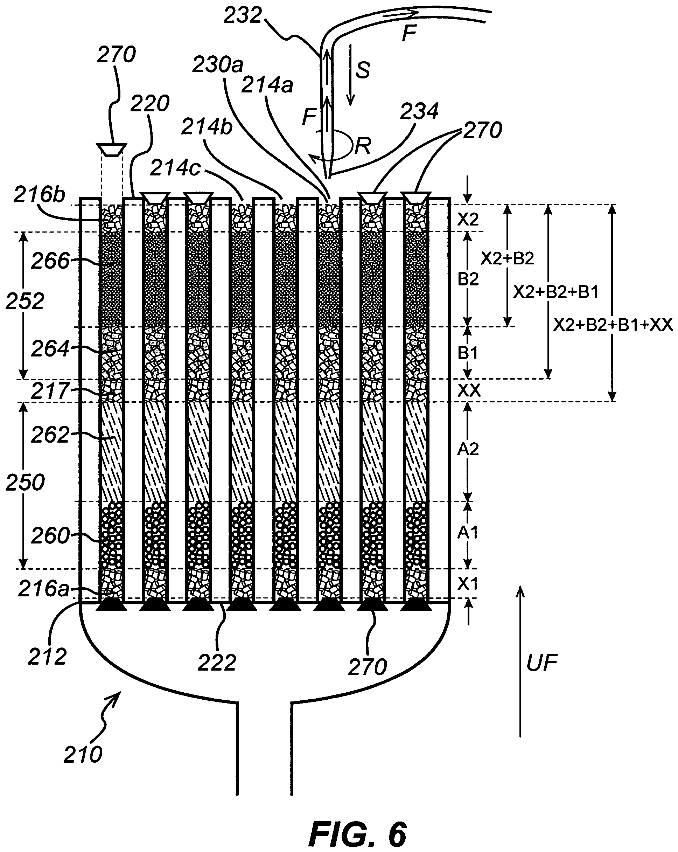

With reference now to Figure 6, another embodiment of the method of the present invention, in which only a portion (i.e., less than all) of the solid materials is removed from the reactor tubes of a reactor will be described in detail. This embodiment is useful, for example, when the solid catalyst material of only one of a plurality of reaction stages in a multi-stage reactor requires replacement. This embodiment of the inventive method leaves a selected portion of the solid materials, which does not require replacement, in the reactor tubes, substantially undisturbed.

Figure 6 provides an enlarged, schematic, partially cut away, elevational side view of an arrangement of apparatus, similar to that shown in Figure 1A, which includes a vertically-oriented multi-stage reactor 210 having a plurality of reactor tubes 214a, 214b, 214c. Various types of solid materials 216a, 260, 262, 217, 264, 266, 216b, including but not limited to catalyst materials (260, 262, 264, 266) and inert materials 216a, 217, 216b, are typically arranged in each of the reactor tubes 214a, 214b, 214c, according to a predetermined packing schedule and collectively form reaction stages 250, 252 within the reactor 210. During normal operation, reactants (not shown) flow in an upflow configuration as described above in connection with Figure 1A. More particularly, reactants (not shown) enter the bottom end of each of reactor tube 214a, 214b, 214c, and contact each of the solid materials 216a, 260, 262, 217, 264, 266, 216b in sequence, as they pass through the reactor tubes 214a, 214b, 214c and at least a portion of the reactants is converted to reaction products. Reaction products and other fluids exit the top end of each reactor tube 214a, 214b, 214c and collectively form a product stream (not shown) which may be subjected to further processing, such as separation and purification. Generally, as discussed hereinabove, the types of catalyst materials in the reactor tubes 214a, 214b, 214c, and the methods by which they are produced, are not particularly limited in connection with the method of the present invention. The catalyst materials need only be capable of catalyzing the desired reaction or reactions to be performed in the reactor 210 and they may be of different, similar, or the same composition, size, shape, etc., depending on the desired reactions. It is well within the ability of persons of ordinary skill in the art to select suitable catalyst materials, and the method of the present invention is not limited by such selection.

The catalysts may be used in whatever particulate form and shape result from the production method such as, for example, spherical, columnar, ring-shaped, irregularly-shaped, or even a combination of these or other shapes. The catalysts may also be molded into a wide range of geometries (rings, solid cylinders, spheres, U-shaped, monoliths, etc.) before being used. For example, the catalyst material can be, and often is, molded (for example in extruders) to form a self-supporting two- or three-dimensional structure, having any of the aforesaid shapes, as well as others. The catalysts can also be applied to a premolded support, which may comprise catalytically active material or inert materials and which may be in any desired shape as is determinable by skilled persons. Where the premolded support is made of inert materials, the catalyst is known as "supported."

Furthermore, as discussed above, inert materials may be physically mixed with active catalyst material, in varying amounts, to create a diluted bulk catalyst mix and, thereby, dampen or otherwise modify the activity of the catalyst. Such modification has included, without limitation, slowing the rate of reaction in that zone relative to undiluted catalyst material, keeping reaction temperatures lower, and even lengthening the useful life of the catalyst material, which can be particularly useful in a commercially operated process.

Thus, one or more inert solid materials may be disposed in the reactor tubes 214a, 214b, 214c, either mixed with various amounts of catalyst material to form diluted reaction zones, or sub-zones, or without any active catalyst material thereby forming one or more inert stages in which no appreciable reactions occur. Inert stages may be positioned upstream, downstream, or intermediate one or more reaction zones, as desired. Suitable inert solid materials for mixing with catalyst materials as diluents include, without limitation: silicon dioxide, silicon carbide, silicon nitride, silicon boride, silicon boronitride, aluminum oxide (alumina), aluminosilicate (mullite), aluminoborosilicate, carborundum, carbon-fiber, refractory fiber, zirconium oxide, yittrium oxide, calcium oxide, magnesium oxide, magnesium oxide-aluminosilicate (cordite), and clay based materials (e.g., Denstone™ line of catalyst supports by Norton Chemical Process Products Corp., of Akron, Ohio). Inert solid materials for forming inert reaction stages include, but are not limited to: alumina, mullite, carborundum, steel (including stainless steel), ceramic, borosilicate glass, and materials comprising one or more of: copper, aluminum, platinum, molybdenum, chromium, nickel, iron, vanadium and phosphorous.

It is noted that any particular reaction zone may have two or more sub-zones of varying catalytic activity even though each sub-zone includes catalyst material of the same composition, because the catalyst may be diluted to varying degrees with inert solid materials in each sub-zone. For example, a reaction zone may have an increasing gradient of catalytic activity along the length of the reaction zone, in the direction of process flow, which results from a succession of sub-zones which have a smaller and smaller proportion of inert material mixed with the catalyst material along the length of the reaction zone. Thus, the sub-zones of the same reaction stage each contain at least a portion of catalyst material having the same composition and, therefore, catalyze the same reaction, but at different rates, conversions and selectivities.

The particulate shape of the inert materials is not especially limited. Typical shapes for inert solid materials include, e.g., Raschig rings, spheres, saddles, particulates, cylinders, rings, small pieces, filaments, meshes and ribbons. The size and shape of the inert materials is determinable by persons of ordinary skill in the art based upon various factors including, but not limited to, the desired reactions, the apparatus in use, the operating conditions, and the scale of the reaction process. For example, one consideration may be the selection of inert materials which quench the temperature of the process fluids in between reaction stages, but which does not cause an appreciable or unacceptable pressure drop as the process fluid flows through the inert materials.

When the catalyst particulate shape is spherical and has a diameter which does not occupy a significant portion of the inside diameter of the reactor tube, the catalyst can be dislodged and extracted from the reactor tubes relatively easily. However, when the catalyst is non-spherical, irregular in shape and/or occupies a significant portion of the inside diameter of the reactor tube, e.g., pellets of 9.5-12.7 mm (3/8-1/2 inch) length and 9.5-12.7 mm (3/8-1/2 inch) diameter within a reactor tube having an inside diameter of, for example, of 22.2 mm (7/8 inch), removal of the catalyst material may be more difficult because the catalyst particles can and often do bridge within the reactor tube. Moreover, the catalyst particles can fuse to each other and to the reactor tube wall as a result of elevated temperatures used during operation of the reactor, which renders removal of the catalyst material from the tubes more difficult.

The multi-stage reactor 210 shown in Figure 6 is configured to perform the two-step, vapor phase, catalytic partial oxidation of a C₂ to C₅ alkene (hereinafter referred to as the "oxidation process"). The oxidation process generally proceeds in two steps as follows: in a first reaction step, propylene is converted to acrolein in the presence of a first catalyst and then, in a second reaction step, the acrolein produced in the first step is converted to acrylic acid in the presence of a second catalyst, typically having a different composition from the first catalyst. Thus, the packing schedule employed for the oxidation process typically results in formation of at least two reaction stages 250, 252 arranged in series in the reactor tubes 214a,
214b, 214c of the reactor 210. More particularly, there is a first reaction stage 250 in which the first reaction step of the oxidation process occurs, and a second reaction stage 252 in which the second reaction step of the oxidation process occurs. Each of the first and second reaction stages 250, 252 further comprises various sub-zones and inert stages, as described in detail hereinafter. Either or both reaction stages may have one or more sub-zones and/or inert stages.

As indicated in Figure 6, a first catalyst composition 260, 262 capable of catalyzing the conversion of propylene to acrolein is disposed in the first reaction stage 250 and a second catalyst composition 264, 266 capable of converting the acrolein to acrylic acid is disposed in the second reaction stage 252. It is noted that catalyst compositions 260, 262, 264, 266 suitable for performing the two reaction steps of the oxidation process, and methods for making them, are generally well-known. Such catalysts typically comprise oxides of one or more metallic element, and so are known as "metal oxides" or "mixed metal oxides," and so will be referred to generically and collectively hereinafter as, "oxidation catalysts." The oxidation catalysts may be produced by any method known in the art including, but not limited to, incipient wetness impregnation, chemical vapor deposition, hydrothermal synthesis, salt melt method, co-precipitation, and other methods. Examples of suitable oxidation catalyst compositions and methods of making them include, but are not limited to, those described in one or more U.S. Patent Nos. 6,383,978, 6,403,525, 6,407,031, 6,407,280, 6,461,996, 6,472,552, 6,504,053, 6,589,907, 6,624,111, and European Patent Publication Nos. EP1097745, EP0700714, EP0415347, EPA0471853 and EPA0700893.

The packing schedule in the reactor tubes 214a, 214b, 214c of the multi-stage reactor 210 will now be described in more detail. It should be understood that the packing schedule described herein is merely one of many possible arrangements of solids in the reactor tubes 214a, 214b, 214c and that successful practice of the method of the present invention is not limited to application to any particular packing schedule. Furthermore, persons of ordinary skill in the relevant art will be readily able to successfully apply the method of the present invention to virtually any packing schedule without undue experimentation, based on the present disclosure and the general knowledge available in the art.

As shown in Figure 6, each reactor tube 214a, 214b, 214c has been packed, or loaded, with solid materials 216a, 260, 262, 217, 264, 266, 216b according to the same packing schedule, which means that, generally, the same kinds of solid materials, in the same sequence and in the same amounts, are disposed therein and form similarly situated reaction stages, zones, and sub-zones 250, 252, A1, A2, B1, B2 in each reactor tube 214a, 214b, 214c. Since the reactor tubes 214a, 214b, 214c are collectively aligned and parallel with one another, the reaction stages, zones and subzones 250, 252, A1, A2, B1, B2 of the multi-stage reactor 210 are formed by the corresponding, collective reaction stages, zones and sub-zones 250, 252, A1, A2, B1, B2 of the reactor tubes 214a, 214b, 214c. For example, the reaction sub-zone A1 of each of the reactor tubes 214a, 214b, 214c collectively form the corresponding reaction sub-zone A1 of the reactor 210 (see Figure 6). Thus, where the "first sub-zone" A1 of the first reaction stage 250 is described, it should be understood to also refer to the collective first sub-zones A1 of all of the reactor tubes 214a, 214b, 214c.

As shown in Figure 6, a quantity of inert material 216a forming an initial inert stage X1 is disposed in each reactor tube 214a, 214b, 214c upstream of the first reaction stage 250, which is to say, the reactants (not shown) enter the initial inert stage X1 first in this exemplary embodiment. There are two reaction sub-zones A1, A2 in the first reaction stage 250, each of which contains an amount of the first catalyst composition 260, 262 for converting propylene to acrolein. Additionally, in this exemplary embodiment, the second reaction stage 252 also comprises two reaction sub-zones B1, B2, each of which contain an amount of the second catalyst composition for converting the product acrolein from the first reaction stage 250 to acrylic acid. An intermediate inert stage XX comprising an amount of inert material 217 is disposed intermediate the first and second reaction stages 250, 252, and more specifically, intermediate the second reaction sub-zone A2 of the first reaction stage 250 and first reaction sub-zone B1 of the second reaction stage 252. Another quantity of inert material 216b is disposed in each reactor tube 214a, 214b, 214c forming a terminal inert stage X2, which is disposed downstream of the second reaction stage 252, i.e., adjacent to and downstream of the second reaction sub-zone B2 of the second reaction stage 252.

It is noted that the positioning of the inert stages X1, XX, X2 relative to the reactor 210 is not critical, and there may be more or less of them than are discussed herein in connection with this embodiment. For example, as will be readily understood by persons of ordinary skill, the intermediate inert stage XX does not necessarily have to be centered in the reactor 210 and reactor tubes 214a, 214b, 214c, nor does it have to be intermediate the first and second reaction stages 250, 252, as is shown in Figure 6. Rather, it is perfectly acceptable for the intermediate inert stage XX to be positioned wherever persons of ordinary skill determine it will be useful. For example, where the packing schedule results in the interface between the first and second reaction stages 250, 252 being located at a position other than the longitudinal center of the reactor 210 and reactor tubes 214a, 214b, 214c, the intermediate inert stage XX may, of course, be positioned commensurate with that interface. As another example, the intermediate inert stage XX may be positioned intermediate otherwise adjacent sub-zones, such as, intermediate the first and second sub-zones B1, B2 of the second reaction stage 252. The reactor 210 may also have an intermediate tubesheet (not shown) which physically divides the reactor shell 212 into two volumetric regions (not shown per se) which are commensurate with the first and second reaction stages 250, 252. Such an intermediate tubesheet provides the ability to control the temperatures of each of the reaction stages 250, 252 separately from one another by circulating fluid of different temperatures through the shell side of each of the volumetric regions. The intermediate inert stage XX may be, and sometimes is, positioned proximate to the intermediate tubesheet (i.e., upstream, downstream or spanning the intermediate tubesheet). Additionally, there may be more than one intermediate inert stage. For example, one intermediate inert stage XX may be positioned intermediate the first and second reaction stages 250, 252, and another may be positioned between two otherwise adjacent sub-zones, such as intermediate the first and second sub-zones A1, A2 of the first reaction stage 252. Similarly, either or both of the initial and terminal inert stages X1, X2, respectively, may or may not be present.

Furthermore, the inert materials 216a, 217, 216b in each of the inert stages X1, XX, X2 may have the same composition, shape and size. Also, one or more of the composition, shape and size may differ amongst the inert materials of one or more of the inert stages X1, XX, X2, such as in this exemplary embodiment wherein, the inert materials 216a, 216b in the initial and terminal inert stages X1, X2, respectively, each comprise Denstone™ and the inert material 217 in the intermediate inert stage XX comprises Raschig Rings. Determination of what types (i.e., compositions, shapes, size, etc.) of inert materials to use in one or more inert stages is well within the ability of persons of ordinary skill in the relevant art.

The sub-zones A1, A2 and B1, B2 of each of the reaction stages 250, 252 in this exemplary embodiment differ from one another because the downstream, second sub-zone A2, B2 of each of the reaction stages 250, 252, respectively, has higher catalytic activity than the upstream, first reaction sub-zone A1, B1. This difference in catalytic activity may be accomplished in various ways, well-known in the art, including but not limited to, varying the catalyst synthesis methods (e.g., change the calcining temperature, performing additional intermediate heating or cooling steps, etc.), loading bulk catalyst material of higher concentration in the downstream, second sub-zones A2, B2 (for example, mix it with less, or no, inert material), or by making each of the downstream, second sub-zones A2, B2 longer than their respective upstream, first reaction sub-zones A1, B1, thereby increasing the volume and reactant contact time in each of the second reaction sub-zones A2, B2.

In this embodiment, shown in Figure 6, for example, the first catalyst composition disposed in the first reaction sub-zone A1 of the first reaction stage 250 was mixed with a suitable amount of inert (or "diluent") material to result in a diluted first catalyst composition 260 having a concentration of 66 wt% of pure first catalyst composition and 34 wt% of inert material, such as particulate ceramic solid material. A concentration of between 50 wt% and 80 wt% of the pure, undiluted first catalyst composition may be used, or even between 66 wt% and 70 wt% of the pure first catalyst composition. As will be understood by persons of ordinary skill in the art, the diluted first catalyst composition 260 in the first sub-zone A1 is less active than the pure first catalyst composition 262 in the second sub-zone A2. The amount of the diluted first catalyst 260 in the first sub-zone A1 fills each reaction tube 214a, 214b, 214c to approximately the same height (see A1, Figure 6) above the inert stage X1. The second sub-zone A2 of the first reaction stage 250 comprises an amount of pure first catalyst composition 262 which fills each reaction tube 214a, 214b, 214c to approximately the same height (see A1+A2, Figure 6) above the inert stage X1.

Additionally, the second catalyst composition disposed in the first reaction sub-zone B1 of the second reaction stage 252 was mixed with a suitable amount of inert (or "diluent") material to result in a diluted second catalyst composition 264 having a concentration of 75 wt% of the pure second catalyst composition and 25 wt% of inert material, such as particulate ceramic solid material. A concentration of between 60 wt% and 90 wt% of the pure, undiluted second catalyst composition may be used, or even between 70 wt % and 87 wt % of the pure second catalyst composition. As will be understood by persons of ordinary skill in the art, the diluted second catalyst composition 264 in the first sub-zone B1 is less active than the pure second catalyst composition 266 in the second sub-zone B2 of the second reaction stage 252. In the exemplary embodiment shown in Figure 6, the amount of the diluted second catalyst 264 in the first sub-zone B1 fills each reaction tube 214a, 214b, 214c to approximately the same height (see A1+A2+XX+B1, Figure 6) above the inert stage X1. The second sub-zone B2 of the second reaction stage 252 comprises an amount of pure second catalyst composition 266 which fills each reaction tube 214a, 214b, 214c to approximately the same height (see A1+A2+XX+B1+B2, Figure 6) above the initial inert stage X1.

After a period of operation, the reactor tubes 214a, 214b, 214c typically contain solid materials in additional to the catalyst and inert materials, such as, but not limited to, products of reaction (e.g., by-products, carbonaceous deposits), impurities introduced with one or more process streams, derivatives of such impurities, and migrating components of catalyst materials. The multi-stage reactor 210 of this exemplary embodiment has been operated essentially continuously, for a length of time during which the catalysts have each experienced, for example, at least 1,000 hours time on stream ("TOS"). Thus, the reactor tubes 214a, 214b, 214c have some combination of all of the above-described solid materials, and at least a portion of the solid materials are tightly wedged or bridged in the reactor tubes 214a, 214b, 214c, making their extraction difficult, without structural damage which renders the solid materials unsuitable for re-use.

Furthermore, as is sometimes the case, the second catalyst composition 264, 266 disposed in the second reaction stage 252 will lose catalytic activity to a degree at which it is no longer performing at the commercially required level, while the first catalyst composition 260, 262 continue to perform acceptably in the first reaction stage 250. In such circumstances, it is clear that the second catalyst compositions 264, 266 must be removed and replaced in the second reaction stage 252, but the first catalyst composition 260, 262 would be damaged and wasted if extracted and replaced and, therefore, should be left undisturbed in the reactor tubes 214a, 214b, 214c.

Generally, a partial catalyst removal and replacement may require extraction of any amount between about 95% and 5% by volume of the solid materials, based on the total volume occupied by the total amount of solid materials in the reactor tubes 214a, 214b, 214c. Of course, the determination of what portion or quantity of the solid materials must be extracted and replaced is readily determinable by persons of ordinary skill in the art, based upon the particular kind of reaction process and apparatus in use and the process conditions, as well as the types and uses of the solid materials, such as the types of catalyst materials, in the tubes of the apparatus and the process conditions. For example, in the apparatus shown in Figure 6, the "selected" portion (216b, 266, 264) of the solid materials 216b, 260, 262, 264, 266 which is to be removed and replaced comprises the inert material 216b in the final inert stage X2, as well as the pure second catalyst composition 266 and the diluted second catalyst composition 264 in the second reaction stage 252.

Since the packing schedule of the solid materials in the multi-stage reactor 210 is known, and assuming that the packing schedule was correctly and accurately applied to each of the reactor tubes 214a, 214b, 214c, the location or position where each of the various reaction stages 250, 252, sub-zones A1, A2, B1, B2, and inert stages X1, XX, X2, begins and ends are also known. The beginning positions and ending positions may be measured along the axial direction of the reactor tubes 214a, 214b, 214c from the either end of the reactor tubes 214a, 214b, 214c, as specified, such as from the exposed end 230a of the corresponding reaction tube 214a (see Figure 6).

For example, the final inert stage X2 comprises inert material 216b which is disposed in the corresponding reactor tube 214a beginning proximate to the exposed end 230a of the reactor tube 214a, and ending at a position which is a known distance (X2) (see Figure 6) from the exposed end 230a. The second sub-zone B2 of the second reaction stage 252 comprises pure second catalyst composition 266 which is disposed in the corresponding reactor tube 214a beginning proximate the end of the final inert stage X2, and itself ending at a position which is a known distance (X2+B2) from the exposed end 230a of the reactor tube 214a. The first sub-zone B1 of the second reaction stage 252 comprises diluted second catalyst composition 264 which is disposed in the corresponding reactor tube 214a beginning proximate the end of the second sub-zone B2, and itself ending at a position which is a known distance (X2+B2+B1) from the exposed end 230a of the reactor tube 214a. The "halt position" will normally be determined and selected by determining the axial distance between the exposed end 230a of the reactor tube 215a and the position at which solid material which is to remain in the reactor tube 214a is present. In this embodiment, since the selected portion of the solid materials (216b, 266, 264) to be removed from the apparatus shown in Figure 6 extends a known distance X2+B2+B1 (i.e., from the exposed end 230a of the reactor tube 214a to the end of the first sub-zone B1 of the second reaction stage 252), the "halt position" is selected to be the distance X2+B2+B1 which extends downward from the exposed end 230a of the reactor tube 214a to the end of the first sub-zone 264 of the second reaction stage 252 (see Figure 6).

Additionally, in the present embodiment, the intermediate inert stage XX, which separates the first and second reaction stages 250, 252, begins at the end of the first sub-zone B1 and extends downward into the reactor tubes 214a, 214b, 214c, a known distance (X2+B2+B1+XX) to the end of the intermediate inert stage XX, at which the first reaction stage 250 begins (see Figure 6). As discussed, the first catalyst composition 260, 262 disposed in the first reaction stage 250 continues to have satisfactory activity and performance and, therefore, is not to be removed. It will be clear to persons of ordinary skill in the art that, at no time should the tip 234 of the hollow rod 232 be inserted into the reactor tubes 214a, 214b, 214c further than a distance of X2+B2+B1+XX from the exposed end 230a of the reactor tube 214a. Thus, in the case where only the second catalyst composition 264, 266 of the second reaction stage 252 is to be removed, the intermediate inert stage XX allows for a margin of error (i.e., a distance of XX) when the operator estimates and monitors the position of the tip 234 of the rotating rod 232 as they are inserted into the reactor tube 214a.

Removal of the selected portion of the solid materials (216b, 266, 264) from the reactor tubes 214a, 214b, 214c, while minimizing damage to the solid materials, especially the inert solid materials 216b, so they are suitable for re-use, in accordance with this "partial removal" embodiment of the method of the present invention will now be described in detail. The first few steps of this embodiment are the familiar steps of: (A) axially aligning a hollow rod 232 with a corresponding reactor tube 214a, (B) positioning the hollow rod 232 such that its tip 234 is proximate to the exposed end 230a of the corresponding reactor tube 214a, (C) rotating the hollow rod 232 (in the direction shown by the arrow **R**), and then (D) axially inserting the rod 232, in the direction shown by the arrow **S** and while rotating, into the exposed end 230a of the corresponding reactor tube 214a, so that its tip 234 is in physical contact with at least a portion of the solid materials 216b, 266, 264 to be removed.

After insertion of the rotating hollow rod 232, dislodging of the selected portion of the solid materials (216b, 266, 264) is commenced, as discussed above, by applying a controlled axially-directed force (in the direction of arrow **S**) to the rotating hollow rod 232 and controllably pressing the tip 234 against the solid materials 216b encountered in the reactor tube 214a. As individual particles of the solid material 216b are dislodged, continued controlled application of the axially-directed force in the direction of arrow **S** steadily urges the rotating hollow rod 232 further into the corresponding reactor tube 214a for dislodging more of the solid materials 216b, 266, 264, until all of the selected portion of the solid materials 216b, 266, 264 is dislodged.

As the solid materials 216b, 266, 264 are loosened and dislodged, they are extracted from the corresponding reactor tube 214a by aspiration in a flowing fluid stream (shown schematically as arrows **F**), through the rotating hollow rod 232. The axially-directed force **S** is applied in a controlled manner to minimize damage to the solid materials (216b, 266, 264) being removed. For example, during the dislodging step, the rotation of the hollow rod 232 and application of the axially-directed force S is monitored and adjusted, and may be even temporarily ceased, thereby allowing the rotational forces exerted by the rotating rod 232 primarily to work on dislodging the solid materials, which minimizes damage to at least a portion of the solid materials, such as the inert solid materials 216b, and to ensure their structural suitability for re-use. After extraction, the inert solid materials 216b may be separated from other extracted solid materials (264, 266) by any known means, including those discussed hereinabove, and may also be rinsed or cleaned by any method known to persons of ordinary skill, including but not limited to, heating, washing with solvent such as water, alcohol, acid, etc, flushing with steam, and combinations thereof, to make them ready for re-use in the same reactor 210, a different reactor, or in an entirely different process or service.

The axial movement and position of the tip 234 the hollow rod 232 is monitored, and the axial movement of the hollow rod 232 halted when the tip 234 is located proximate to the halt position, i.e., in this exemplary embodiment, when the tip 234 is positioned at a distance of X2+B2+B1 from the exposed end 230a of the corresponding reactor tube 214a. To facilitate monitoring the axial movement of the tip 234 of the rotating rod 232, markings may be provided on the rotating rod 232, each of which indicates a linear distance from the tip 234, so that the markings on the portion of the rod 232 not yet inserted into the reactor tube 214a can be read and will indicate how far from the exposed end 230a the rod 232 has been inserted. From this information, it can be estimated where the tip 234 is, i.e., at what axial position in the reactor tube 214a the tip is located.

As a practical matter, prior to commencing removal of the solids from the reactor tubes of a reactor, operation of the reactor must be ceased, and the reaction fluids and any loose particulates flushed from the reactor tubes. This may be accomplished by any conventional or otherwise suitable method as is determinable by persons of ordinary skill and is not particularly limited in connection with the method of the present invention. For example, one shut down method involves the following actions: the reactor is shut down, feed lines are closed or disconnected to cease the supply of fluids and other materials to the reactor, process fluids are allowed to continue flowing from the reactor outlet, and a shot of gaseous fluid (such as nitrogen, air or steam) is fed to the reactor to force any remaining process fluid and any lose particulate solids, out of the reactor tubes. Optionally, a decoking step may also be performed, which involves feeding a heated oxygen-containing gas or other fluid stream to the reactor tubes 214a, 214b, 214c to oxidize and dislodge at least a portion of any carbonaceous deposits which are sometimes present in significant quantities.

Given the facts that multiple operators may be involved, over a number of days or weeks, in the removal and replacement of solid materials, such as catalysts and inert materials, and that there are a number of discrete actions which must be performed in sequence, in connection with each of a plurality of reactor tubes, which may number as many as 10,000, or 30,000, or even more, it is necessary to track and communicate the status of each reactor tube during replacement of one or more solid materials. The "status" of each reactor tube 214a, 214b, 214c is an indication of which steps of a method or process for removing solid materials therefrom have been successfully applied to each tube 214a, 214b, 214c and also, therefore, the status is also an indication of what step should be performed next in connection with any given reactor tube 214a, 214b, 214c. A simple, well-organized tracking procedure has been developed for efficiently tracking and communicating the status of the reactor tubes at any given time during removal and replacement.

More generally, the procedure may be applied to track and communicate the status of a process which is in progress, i.e., during performance of the process, is particularly useful when the process comprises at least two steps which are performed sequentially.

The procedure is a method for tracking and communicating the status of an in-progress process, and comprises the steps of providing a code having a plurality of code members, associating a code member with each step of the in-progress process, and providing a plurality of indicators, each of which bears a code member. Each indicator is sized and shaped to cooperate with an end of a corresponding tube to form a moisture-resistant seal therewith. The method further comprises communicating to operators which step has been most recently completed for each tube by positioning an indicator, bearing the code member associated with the most recently completed step for the tube, on the exposed end of the tube.

With reference to the present invention, the method may also comprise tracking and communicating the status of the reactor tubes 214a, 214b, 214c during removal and replacement of all or a portion of the solid materials. As described hereinafter, placing indicators bearing code members on the accessible, exposed end of each of the reactor tubes, according to a code, after at least one step of the method is performed for each reactor tube will enable an operator to determine which step to perform next for each of the reactor tubes.

In general, the process being performed on the tubes, a method for tracking and communicating the status of an in-progress process comprising the method of claim 1, said in-progress process having at least two steps which are performed sequentially, the method comprising:
(a) providing a code having a plurality of code members and associating a code member with each step of the in-progress process;
(b) providing a plurality of indicators each of which is sized and shaped to cooperate with an end of a corresponding tube to form a moisture-resistant seal therewith, wherein each indicator bears a code member;
(c) communicating to operators which step has been most recently completed for each tube by positioning an indicator bearing the code member associated with the most recently completed step on the exposed end of the tube.

Tracking and communicating the status of each reactor tube 214a, 214b, 214c during a dislodging and extraction process may be accomplished, for example, using a plurality of indicators, which may be tube covers, such as caps, or the plugs 270 shown in Figure 6, and a code, as follows. The tube covers are each sized and shaped to securely cover or block the exposed end 230a of each reactor tube 214a. For example, without limitation, the tube covers may each be sized and shaped as caps (not shown per se) to fit securely over the exposed end 230a of each reactor tube 214a, similar to a jar lid. Alternatively, as shown in Figure 6 in particular, the tube covers may be sized and shaped as plugs 270 which are at least partially insertable in the exposed end 230a of the corresponding reactor tube 214a. Regardless of shape, each tube cover should form a moisture-resistant seal with the exposed end 230a of the corresponding reactor tube 214a and should be visible and accessible to operators when so positioned. Exemplary materials of construction for the tube covers include, but are not limited to: polyethylene, cork and rubber. A commercial source of various types and shapes of tube covers that would be suitable for use as indicators in accordance with the present invention is Caplugs, of Buffalo, New York, U.S.A. Of course other commercial sources exist and the indicators may even be custom fabricated or manufactured without involvement of a commercial supplier.

The code cooperates with the plurality of indicators and may be any known means of recordation and communication which is familiar to persons of ordinary skill. For example, without limitation, the plugs 270 may be color coded, or may have varied markings, numbers, or symbols on their surfaces, or operators may write on the plugs 270 in between steps of the extraction and replacement process.

While not wishing to limit the present invention, as a particular example, where the code comprises color-coded plugs 270, a plurality of yellow plugs, of blue plugs, of red plugs, etc., may be provided, and each color assigned to indicate a different status. For instance, yellow may be selected to indicate that a reactor tube has been purged of process fluids and dried and is, therefore, ready for the dislodging and removal of the solid materials, in accordance with the method of the present invention. Blue may be selected to indicate that all or the selected portion, as desired, of the solid materials have been dislodged and extracted from a reactor tube and, therefore, the tube is ready for further cleaning and/or filling with new solid materials. Red may be selected to indicate that there was difficulty in dislodging and extracting the solid materials in a particular reactor tube 214a and, therefore, that tube must be revisited. Another color may be selected to indicate welded tubes which do not require removal of solid materials therefrom.

To implement the tracking and communicating of the status of the reactor tubes using the indicators and the code described above, the differently colored plugs may be inserted into the reactor tubes, and may also be replaced by other colored plugs, at the appropriate times during the removal and replacement process. More particularly, after reactor is shut down and the process fluids and loose solid particles are flushed from the reactor tubes, a yellow plug may be inserted into the end of each reactor tube to indicate and communicate that the reactor tubes having such yellow plugs are ready for the removal and extraction of solid materials in accordance with the method of the present invention. Even an operator not present during the flushing procedure will know, from seeing the yellow plugs, that the flushing has been completed and which reactor tubes are ready for the dislodging and extraction of solid materials. When one or more reactor tubes are ready for the dislodging and extracting of solid materials, the yellow plug(s) are, of course, removed from as many tubes as can be serviced by the particular apparatus being used.

When removal and extraction of the desired solid materials from each of the one or more reactor tubes is completed, a blue plug may be inserted into the exposed end thereof to indicate that all or the selected portion of solid materials have been extracted, and the reactor tube is ready to be re-packed with replacement solid materials, such as, for example, fresh, unspent catalyst material. Where the solid materials are particularly impacted and wedged into a particular reactor tube, a red plug may be placed in the exposed end of that reactor tube to indicate that solids remain therein and that an operator will need to focus in particular on this reactor tube to remove the remaining solid materials. Thus, the dislodging and extraction activities may continue and be completed for all of the reactor tubes which do not present problems, while other operators may revisit reactor tubes still containing solid materials to be dislodged to apply particular attention and pressure to the solid materials remaining in these reactor tubes.

As will be readily understood by persons having ordinary skill, each of the reactor tubes is refilled with new solid materials according to the applicable packing schedule. When the packing schedule requires repacking all or a portion of the reactor tubes with different solid materials to form multiple zones and sub-zones, after one or more such zones or sub-zones is formed, colored plugs 270 may again be placed on the exposed ends of the tubes and the different colors assigned to indicate completion of a particular corresponding zone or sub-zone. As each zone and sub-zone is formed in each reactor tube, the colored plugs may be replaced by plugs of a different color. In this manner, operators performing the repacking process will be able, by looking at the colored plugs and decoding their meaning according to their color, to determine which of the zones or sub-zones has been loaded and, also, which in the next zone or sub-zone that should be formed, for each reactor tube.

Other embodiments of the method of the present invention may be useful, such as, without limitation, including removal of the solid materials 217 from the intermediate inert stage XX in addition to the solid materials 216b, 266, 264 of the terminal inert stage X2 and the second reaction stage 252. Another embodiment of the method of the present invention would be removal of all of the solid materials 216b, 266, 264, 217, 262, 260, 216a from the reactor tubes 214a, 214b, 214c to perform a complete cleaning and repacking of the reactor 210. Using the method of the present invention to remove all of the solid materials 216b, 260, 262, 217, 264, 266, 216b from the reactor tubes 214a, 214b, 214c facilitates easy separation of the solid materials into their different types and compositions, because intermediate halt positions at distances of X2, X2+B2, X2+B2+B1, X2+B2+B1+XX, X2+B2+B1+XX +A2, X2+B2+B1+XX+A2+A1, and X2+B2+B1+XX+A2+A1+X1, can be employed to indicate the extracted solids should be directed to different collection containers. It is noted that when all the solid materials are to be extracted, the method of the present invention could be used in cooperation with the older (above-described) fish tape method by dislodging and extracting the solid materials 216b, 266, 264 from the terminal inert stage X2 and the second reaction stage 252, with or without further dislodging and extraction of the solid materials 217 of the intermediate inert stage XX, with the remaining solid materials 216a, 260, 262 (and 217, if necessary) being dislodged using a fish tape (not shown) inserted upward from the bottom ends of the reactor tubes 214a, 214b, 214c and allowing the remaining solid materials 216a, 260, 262 (and 217, if necessary) to drop out of the bottom of the reactor tubes 214a, 214b, 214c. The method of the present invention would then facilitate separation of the extracted solid materials 216b, 266, 264 (and optionally, 217) from one another, while separation of the remaining solid materials 216a, 260, 262 (and 217, if necessary) may be accomplished by any method known to those of ordinary skill in the art.

As previously discussed, after extraction and separation, the inert solid materials 216b, 217 may be rinsed or cleaned by any method known to persons of ordinary skill, including but not limited to, heating, washing with solvent such as water, alcohol, acid, etc, flushing with steam, and combinations thereof, to make them ready for re-use in the same reactor 210, in a different reactor, or in an entirely different process or service.

Additionally, the method of the present invention, when used to remove all the solid materials 216b, 266, 264, 217, 262, 260, 216a from the reactor tubes 214a, 214b, 214c to perform a complete cleaning and repacking of the reactor 210, may further include cleansing the emptied reactor tubes 214a, 214b, 214c, after all solid materials 216b, 266, 264, 217, 262, 260, 216a have been extracted and before performance of the repacking of the tubes 214a, 214b, 214c. For example, a method and apparatus, known as the WATERLAZER™ and which is commercially available from HydroChem of Deer Park, Texas, U.S.A., is capable of directing water through a flexible rotatable and axially-movable lance and nozzle combination, at high pressure of up to 275.8 MPa (40,000 pounds per square inch), to the inner surfaces of reactor tubes to remove any solids, deposits, etc. which remain after the dislodging and extraction activities. Of course any method or apparatus capable of cleaning and flushing remaining solids, deposits and accretions from the reactor tubes, without damaging the tubes, may be used.

The present invention also provides an apparatus for minimizing damage to solid materials during dislodging and extraction of the solid materials from one or more reactor tubes of a shell-and-tube reactor. The apparatus facilitates dislodging and extraction of at least a portion of the solid materials while at least a portion of the extracted solid materials remain structurally suitable for re-use after dislodging and extraction.

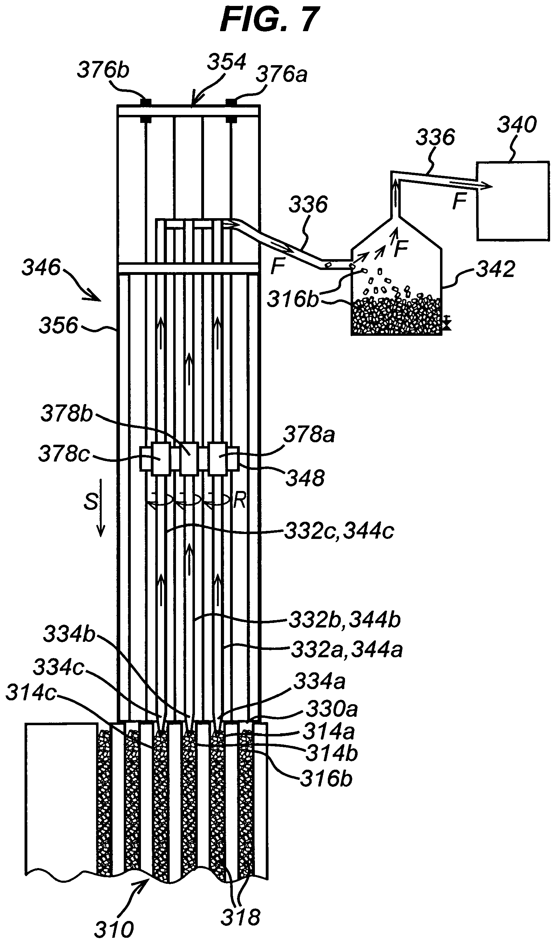

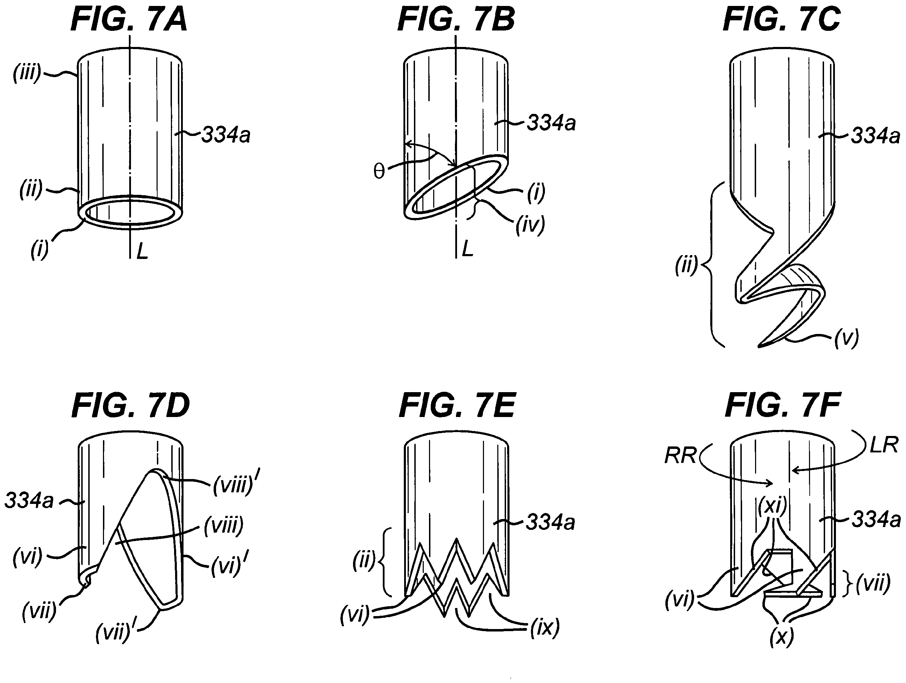

A basic, generic embodiment of the apparatus of the present invention will now be described in some detail, with reference to Figures 7-10, which provide various views of an apparatus 346 in accordance with the present invention, in use with a shell-and-tube reactor 310 containing solid materials 316b, 318, at least a portion of which are to be dislodged and extracted. More particularly, Figure 7 provides a schematic elevational front view of the apparatus 346 and a partial cross-sectional cut-away view of the reactor 310, wherein the reactor 310 has a plurality of vertically-oriented reactor tubes 314a, 314b, 314c, which are parallel with one another and each of which contains solid materials 316b, 318 therein. The apparatus 346 is designed and adapted to minimize damage to at least a portion of the solid materials 316b, 318 during dislodging and extraction. Generally, the apparatus 346 has a mounting assembly 354 and a carrier 348 which is movably mounted to the mounting assembly 354. At least a portion of the mounting assembly 354, for example, the frame 356, is adapted to remain stationary relative to the reactor 310 and the reactor tubes 314a, 314b, 314c during operation of the apparatus 346.

With reference still to Figure 7, the apparatus 346 also has at least one hollow rod, such as the plurality of hollow rods 332a, 332b, 332c shown. While it is understood that the apparatus 346 may, of course, have a single hollow rod, an apparatus 346 having a plurality of hollow rods, as shown in the figures, facilitates dislodging and extracting solid materials from more than one reactor tube 314a, 314b, 314c at a time, which accelerates the overall process of extracting and replacing the solid materials. Each one of the plurality of hollow rods 332a, 332b, 332c, is mounted on the carrier 348, oriented parallel to one another, and arranged in a configuration that matches the regular, repeated pattern formed by the exposed ends 330a (330b, 330c, not shown) of the reactor tubes 314a, 314b, 314c (pattern not shown, but see, for instance, Figure 2 described above).

Furthermore, each hollow rod 332a, 332b, 332c is sized and shaped for insertion into a corresponding reactor tube 314a, 314b, 314c of the reactor 310. There is no particular limitation on the material of construction for the hollow rod 332a, 332b, 332c, since they may be either rigid and unbendable, or have some flexibility, as long as the rods do not collapse under a reduced pressure, which may be applied by an aspirator 340, as discussed in further detail hereinafter. Suitable materials of construction include, for example, without limitation, polymer resins such as polyethylene, polypropylene, teflon, and polyvinyl chloride, or metals, such as stainless steel and carbon steel, or combinations thereof.

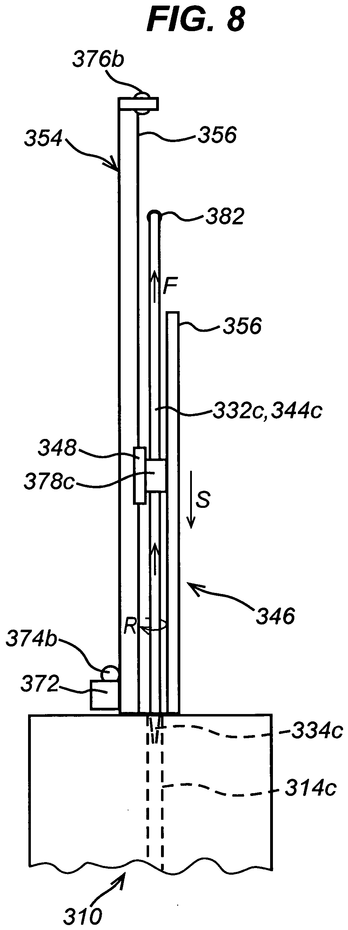

Each hollow rod 332a, 332b, 332c has a tip 334a, 334b, 334c sized and shaped for contacting and dislodging at least a portion of the solid materials 316b, 318, and an axial lumen 344a, 344b, 344c for conveying at least a portion of the dislodged solid materials from the corresponding reactor tube 314a, 314b, 314c. As shown in Figures 7A-7F, the tips 334a, 334b, 334c may have any shape and structure which will dislodge the solid materials to be extracted, without destroying them. For example, in Figure 7A, a tip 344a is shown having a simple circular end surface (i) formed by horizontally cutting the distal end (ii) of the tip perpendicularly to the longitudinal axis **L** of the tip 344a. The tip 344a may be affixed, in a fluidly sealable manner, at its proximate end (iii) to the distal end (not shown) of the axial lumen 344a of the corresponding hollow rod 332a (not shown in Figures 7A-7F, but see Figures 7 and 8), by any conventional means, including, but not limited to, a flanged connection, a threaded screw-type connection, manufacturing the axial lumen and tip as a single, unitary structure, welding, and combinations thereof.

Figure 7B shows the tip 334a having an elliptic end surface (i) sloping at a sloping angle θ toward a surface parallel with the longitudinal axis **L** of the tip 344a. The sloping angle θ may be, for example, without limitation, 30 degrees to 70 degrees, for example, about 45 degrees, or even about 60 degrees. The tip structure shown in Figure 7B has a total open area that is larger than the open area of the tip structure shown in Figure 7A. Additionally, a space (iv) is formed between the solid material to be extracted and the tip 334a, which facilitates extraction of the solid material by the fluid stream **F** (see any of Figures 7-10).

Figure 7C shows a tip 334a having a spiral structure, similar to an auger shape, which terminates in a relatively acute point (v) at its distal end (ii).

In Figure 7D, the tip 334a has two oppositely positioned extensions (vi), (vi)' each of which becomes narrower toward their distal ends (vii), (vii)'. The openings (viii), (viii)' which remain between the extensions (vi), (vi)' each approximate a "U" shape. The open area of the tip 334a shown in Figure 7D is also larger than that shown in Figure 7A, which provides a suitable space between the solid material to be dislodged (not shown) and the tip 334a so that the solid material is more easily aspirated from the reactor tube by the fluid stream **F** (see any of Figures 7-10).

Another tip structure is provided in Figure 7E wherein the tip 334a has a plurality of triangular wedge-shaped extensions (vi) positioned along the circumference of the distal end (ii) of the tip 334a and creating gaps, or openings (ix) therebetween. Although not shown, the extensions (vi) may be shaped differently than triangular, such as, for example, narrow rectangular extensions which line the circumference of the distal end of the tip 334a, similarly creating gaps, or openings therebetween.

In FIG. 7F, the tip 334a comprises a plurality of tapered extensions (vi), each of which are bent, or angled, at their distal ends (vii) to create a plurality of hooks (x) having blunt posterior surfaces (xi). When this tip 334a is rotated to the left (as shown by the arrow **LR**), one or more of the hooks (x) may catch on solid materials and accomplish initial minor dislodging and displacement, followed by reversing the direction of rotation (see the arrow **RR**) which engages the blunt posterior surface (xi) to further displace dislodged solid materials and enable their extraction from the reactor tube.

With reference now back to Figure 7, the axial lumen 344a, 344b, 344c of each hollow rod 332a, 332b, 332c may have any cross-sectional shape which will fit into the corresponding reactor tubes 314a, 314b, 314c with sufficient clearance that the hollow rods 332a, 332b, 332c may be independently rotated while inserted in the reactor tubes 314a, 314b, 314c. A circular, or even oval, cross-sectional shape is often most suitable for the axial lumens 344a, 344b, 344c, since each of the reactor tubes 314a, 314b, 314c also tends to have a circular cross-sectional shape. The material of construction, as well as the shape of different portions of each hollow rod 332a, 332b, 332c may vary, as appropriate, which is easily determinable by persons of ordinary skill in the art.

Assuming that the reactor tubes 314a, 314b, 314c are of fairly uniform inner diameter, for a given embodiment of the apparatus 346, the outer diameter of the axial lumen 344a, 344b, 344c of each hollow rod 332a, 332b, 332c should be approximately the same as one another. Similarly, the outer diameter of the tip 334a, 334b, 334c of each hollow rod 332a, 332b, 332c should also be approximately the same as one another. However, for each rod 332a, 332b, 332c, the outer diameter of the axial lumen 344a, 344b, 344c and the outer diameter of the tip 334a, 334b, 334c may differ from one another, with the outer diameter of the tip 334a being greater than the outer diameter of the axial lumen 344a, or vice-versa. For example, in a particular embodiment of the apparatus 346 of the present invention, the outer diameter of the axial lumen 344a, 344b, 344c of each hollow rod 332a, 332b, 332c may be approximately 20.6 mm (0.8125 inch) and the tip 334a, 334b, 334c of each hollow rod 332a, 332b, 332c may be slightly greater at approximately 22.2 mm (0.875 inch).

Furthermore, the outer diameters of the axial lumen 344a, 344b, 344c and of the tips 334a, 334b, 334c may differ from one embodiment of the apparatus 346 to another, depending upon the inner diameter of the reactor tubes 314a, 314b, 314c. Because of the dependency on the inner diameter of the reactor tubes 314a, 314b, 314c, the outer diameters of the axial lumen 344a, 344b, 344c and of the hollow rods 332a, 332b, 332c are best described and specified in terms of a "clearance ratio" and a "free-flow ratio," as follows.

As used herein, "clearance ratio" is the ratio of the outer diameter of the larger of the axial lumen 344a, 344b, 344c and the tips 334a, 334b, 334c of the hollow rods 332a, 332b, 332c, to the inner diameter of the reactor tubes 314a, 314b, 314c. For any embodiment of the apparatus 346, the clearance ratio should be in the range of from 0.60 to 0.99, for example, from 0.75 to 0.98, to ensure free non-binding axially-directed movement of the hollow rods 332a, 332b, 332c in the reactor tubes 314a, 314b, 314c.

As used herein, "free-flow ratio" is the ratio of the inner diameter of the smaller of the axial lumen 344a, 344b, 344c and the tips 334a, 334b, 334c of the hollow rods 332a, 332b, 332c, to the maximum particle dimension of the solid material in the reactor tubes 314a, 314b, 314c. The term "maximum solids particle dimension" is used herein to mean the diameter of a spherical particle and the largest dimension (length, width, diameter, etc.) for a non-spherical particle, such as a cylinder. For any particular embodiment of the apparatus 346, the free-flow ratio should be in the range of from 2 to 25, for example, from 3 to 8, to minimize bridging, impacting and blockage during conveyance of solid materials through the hollow rods 332a, 332b, 332c. Examples of the foregoing relative dimensions are provided below, without limitation.

In a particular embodiment of the apparatus 346 in accordance with the present invention, which will be used to remove spherical solid materials (e.g., spherical catalyst pellets) having a diameter of about 5.1 mm (0.20 inch) (i.e., maximum solids particle dimension) from reactor tubes, each of which has an inner diameter of about 24.9 mm (0.98 inch), the outer and inner diameters of the axial lumen of each hollow rod may be approximately 0.8125 inch (20.66 millimeters) and 0.75 inch (19 millimeters), respectively. The outer and inner diameters of the tip of each hollow rod may be approximately 0.875 inch (22.2 millimeters) and 0.75 inch (19 millimeters), respectively. The foregoing dimensions provide a maximum clearance ratio of approximately 0.89 (=0.875/0.98) and a minimum free flow ratio of approximately 3.75 (=0.75/0.20), each of which are within the aforesaid ranges for these characteristics.

Additionally, the apparatus 346 having hollow rods 332a, 332b, 332c of the above-specified dimensions may be used to remove generally cylindrical solid materials (e.g., Raschig rings) having a diameter of about 0.1875 inch (4.8 millimeters) and a length of about 0.25 inch (6.4 millimeters), which results in a maximum solids particle dimension of 0.25 inch (6.4 millimeters), from reactor tubes each also having an inner diameter of about 24.9 mm (0.98 inch). The foregoing dimensions provide a maximum clearance ratio of approximately 0.89 (=0.875/0.98) and a minimum free flow ratio of approximately 3.0 (=0.75/0.25), each of which are within the aforesaid ranges for these characteristics. This particular apparatus 346 having hollow rods 332a, 332b, and 332c with the above-stated dimensions would be effective at concurrently removing 0.2 inch (5 millimeter) diameter spherical catalyst particles and cylindrical Raschig rings having lengths of 0.25 inch (6.4 millimeters) from the reactor tubes of a reactor having reactor tubes with an inner diameter of about 24.9 mm (0.98 inch).

With reference now to the schematic elevational left side view of the apparatus 346 and reactor 310 provided in Figure 8, a transmission assembly (not entirely shown, but discussed further below) is affixed to the mounting assembly 354 and in communication with a power source, such as the motor 372 shown schematically in Figure 8. The transmission assembly may comprise any device, or plurality of devices, known to persons of ordinary skill in the art to be capable, singularly or collectively, of imparting controllable, axially-directed force which moves another device or apparatus (e.g., the carrier 348 and the hollow rods 332a, 332b, 332c). It is contemplated that the transmission assembly may even be an operator and that, instead of a mechanical motor, the controlled axially-directed force (S) is supplied manually to move the carrier 348 and hollow rods 332a, 332b, 332c. The transmission assembly is in communication with the carrier 348 for applying a controlled axially-directed force (S) to the carrier 348 and, therefore, also to each of the hollow rods 332a, 332b, 332c mounted on the carrier 348).

In a more conventional embodiment, as shown schematically in Figures 7 and 8, for example, without limitation, the transmission assembly may include various pulleys 374a, 374b, 376a, 376b (only the left side pulleys 374b, 376b being visible in Figure 8), along with belts, chains or cables (not shown), which are in contact with and communicate with one or more of the pulleys 374a, 374b, 376a, 376b and the carrier 348. In such an embodiment, the motor of the transmission assembly supplies force which is transmitted by the pulleys 374a, 374b, 376a, 376b and the belts, chains or cables (not shown). Figure 8 does not provide a cross sectional
view of the reactor 310 and, therefore, the inserted tip 334c of the left-most hollow rod 332c and the corresponding reactor tube 314c into which it is inserted are shown in phantom in Figure 8. The right side view of the reactor 310 and apparatus 346 would be a mirror view of the left side view of Figure 8.

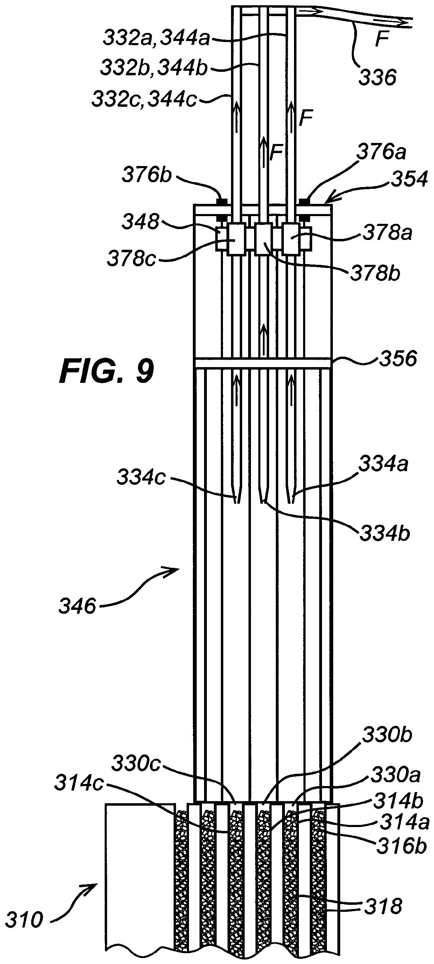

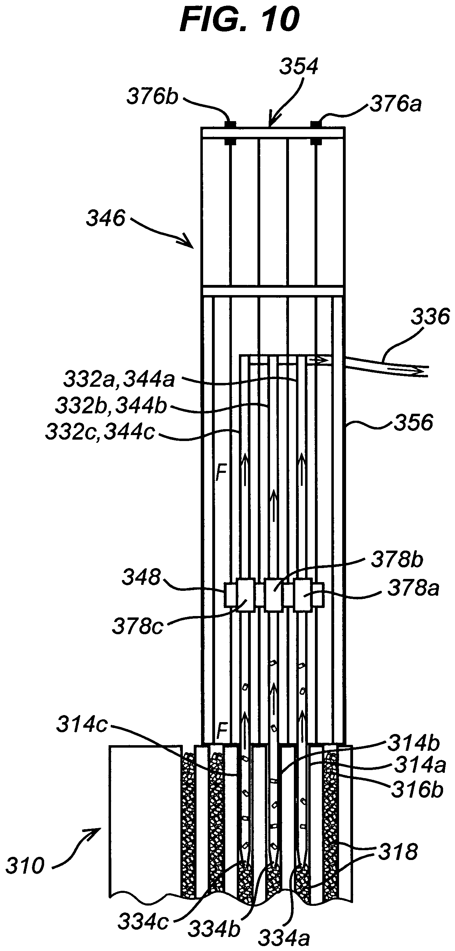

By operation of the transmission assembly, the carrier 348, together with the hollow rods 332a, 332b, 332c connected thereto, are movable relative to the reactor 310 and reactor tubes 314a, 314b, 314c, between a withdrawn position (shown in Figure 9) and an inserted position (shown in Figure 10), as well as to any one of a plurality of positions intermediate the withdrawn and inserted positions. When the carrier 348 and hollow rods 332a, 332b, 332c are in the withdrawn position (Figure 9), the tips 334a, 334b, 334c of the hollow rod 314a, 314b, 314c are aligned with, but external to, the exposed ends 330a, 330b, 330c of the corresponding reactor tubes 314a, 314b, 314c. When they are in the inserted position (Figure 10), the hollow rods 332a, 332b, 332c are inserted into the corresponding reactor tubes 314a, 314b, 314c.

The apparatus 346 also has one or more rotator assemblies 378a, 378b, 378c, shown schematically in Figures 7-10, for engaging and rotating the hollow rods 332a, 332b, 332c. The one or more rotator assemblies 378a, 378b, 378c are mounted to the carrier 348 and each is in communication with a corresponding one or more of the hollow rods 332a, 332b, 332c. The type of rotator assemblies 378a, 378b, 378c and the manner of their attachment to the hollow rods 332a, 332b, 332c are not particularly limited. In Figure 8, for example, one rotator assembly 378a, 378b, 378c is provided for each of the hollow rods 332a, 332b, 332c whereby each of the hollow rods 332a, 332b, 332c is rotatable independently of the others. The rotator assemblies 378a, 378b, 378c may be any device or devices, known to persons of ordinary skill, which singularly or collectively are capable of engaging and rotating the hollow rods 332a, 332b, 332c. For example, without limitation, each rotator assembly 378a, 378b, 378c may include a drive motor (not shown per se) to provide power for rotation, and a transmission device (not shown per se) for transmitting that power to one or more of the hollow rods 332A, 332b, 332c, as are familiar to persons of ordinary skill.

When the carrier 348 and the hollow rods 332a, 332b, 332c are in the inserted position described above, with the tips 334a, 334b, 334c of each rod 332a, 332b, 332c in contact with at least a portion of the solid materials 316b, 318 to be removed from each corresponding reactor tube 314a, 314b, 314c (see, e.g., Figure 10), and the rotator assemblies 378a, 378b, 378c are operated, the hollow rods 332a, 332b, 332c rotate and each tip 334a, 334b, 334c impacts and dislodges at least a portion of the solid materials 316b, 318, while minimizing damage to the solid materials 316b, 318, at least a portion of which remain structurally suitable for re-use after extraction.

It is noted that another embodiment of the apparatus (not shown), may be constructed and configured to operate and remove solid materials from reactor tubes which are horizontally-oriented. For such an application, the mounting assembly, the carrier, the hollow rods, and the other components of the apparatus, would simply be configured and cooperate with one another to apply an axially-directed force which is horizontally oriented to move the carrier 348 and hollow rods 332a, 332b, 332c horizontally, between an inserted position and a withdrawn position, as well as to any one of a plurality of positions therebetween. It is believed that configuration and operation of such a horizontally-oriented apparatus, in accordance with the present invention, is well within the ability of persons of ordinary skill in the art with benefit of the present disclosure and based on general knowledge available in the art.

As shown schematically in Figure 7 only, an aspirator 340, or vacuum source, may be connected in fluid communication with the axial lumen 344a, 344b, 344c of one or more of the hollow rods 332a, 332b, 332c by a conduit 336, for extracting dislodged solid material 316b from the corresponding reactor tubes 314a, 314b, 324c, by providing a flowing fluid stream **F.** The aspirator 340 is not particularly limited and may be any conventional type known to persons of ordinary skill. Typically, a suitable aspirator comprises an exhaust gas pump (not shown) that is driven by a power source, such as a motor and an engine (not shown). At least a portion of the dislodged solid material 316b is entrained in the flowing fluid stream **F** and is conveyed out of each of the corresponding reactor tubes 314a, 314b, 324c and away from the reactor 310. At least a portion of the conduit 336 should be flexible for allowing and facilitating movement of the carrier 348 and hollow rods 332a, 332b, 332c, relative to the aspirator 340 and the frame 356 of the mounting assembly 354.

As discussed above in connection with the method of the present invention and Figure 4, it may sometimes be desirable to separate and collect the extracted solid materials 316b from the fluid stream **F,** as well as from one another based upon type, size, composition, or some other criteria.

Thus, the apparatus 346 of the present invention may further include a separation apparatus 342 for separating the extracted solid materials 316b from the flowing fluid stream **F** and, optionally, a collection apparatus (which, in Figure 6, is part of the separation apparatus 342) for collecting and holding the solid materials 316b after separation. The separation device 342 may be any conventional device known to persons of ordinary skill in the relevant art that is capable of causing or allowing separation of at least a portion of the extracted solid materials 316b from the flowing fluid stream **F.** The collection apparatus 342 may be any conventional apparatus known to persons of ordinary skill in the relevant art that is capable of collecting and holding at least a portion of the separated solid materials 316b. For example, without limitation, the separation 342 device may be a container, or other vessel, such as are shown schematically in Figures 4 and 7, which is in fluid communication with the conduit 336 and positioned intermediate the hollow rods 332a, 332b, 332c and the aspirator 340, for catching solid material 316b as it separates from the flowing fluid stream **F,** in this case, due to gravitational forces.

Although not shown per se, another embodiment of the apparatus of the present invention may include a plurality of separation devices, arranged in series, to catch solid materials of varying average mass as they sequentially drop out of the flowing fluid stream **F** due to gravitational and inertial forces. The solid material which first separates from the fluid stream **F** (i.e., farthest upstream) may be that which has the greatest mass, and then the next least mass, and so on, until the solid material with the least mass falls out of the fluid stream **F** and into a container (not shown).

Baffles (not shown) may also be provided to facilitate gravitational and inertial separation of the extracted solids from the flowing fluid stream **F.** Additionally, the velocity of the flowing fluid stream **F** may also be controlled and manipulated by providing a tortuous path in the conduit 336, or adjusting the aspiration rate, so that the velocity is at a rate which facilitates the gravitational and inertial separation of the extracted solids from the flowing fluid stream **F.** A tortuous path may be created in the conduit 336 by including one or more baffles, elbow turns, or even valves, in the conduit 336.

Additional separation apparatus may be employed to facilitate separation of extracted solid materials by type or size, such as by separating the inert material 316b from the second catalyst composition of the first and second sub-zones B1, B2 of the second reaction stage 252. For instance, one or more filters (not shown) with suitable mesh opening sizes may be employed (e.g., positioned proximate to, or in, the container 342 or the conduit 336) to separate the solid materials by size, or magnets of predetermined magnetic field strength may be employed (e.g., positioned proximate to, or in, the container 342 or the conduit 336) to separate solid material containing ferrous metal from that which is substantially ferrous metal-free. A filter (not shown) may be positioned proximate the inlet of the aspirator 340 to minimize the dust and particulates which may otherwise enter the aspirator apparatus and interfere with its continued operation.

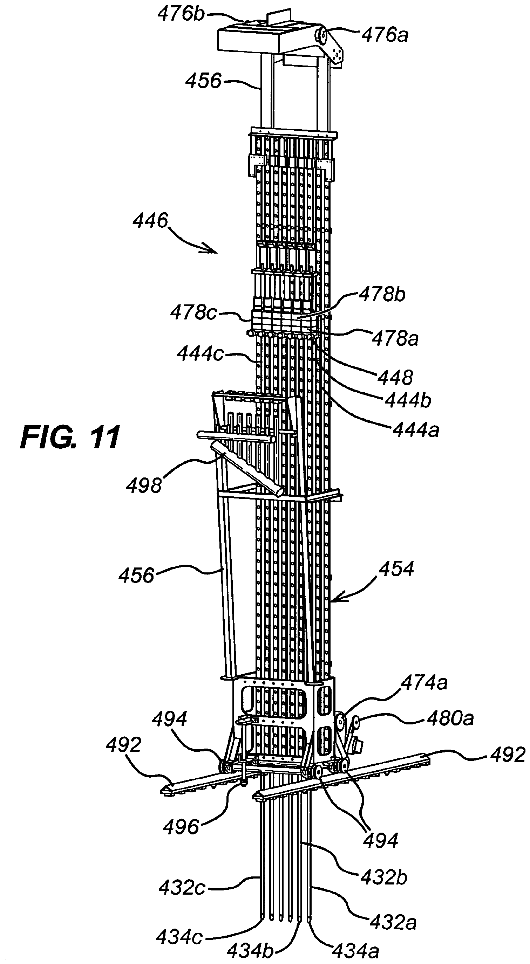

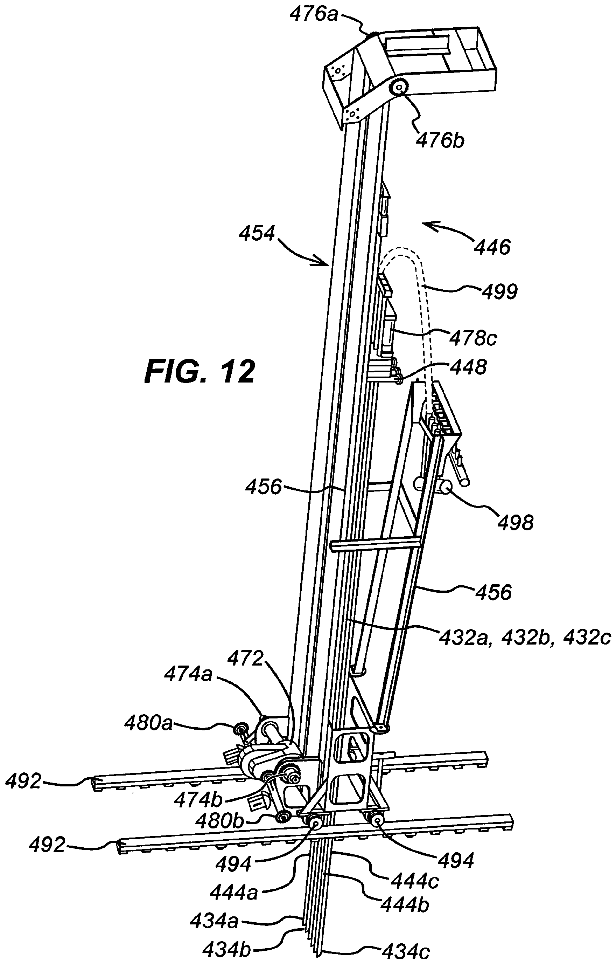

With reference now to Figures 11 and 12, perspective front and right side views, respectively, of another particular embodiment of the apparatus of the present invention are shown. Generally, the apparatus 446 of this embodiment has the same components as the generic embodiments described hereinabove, as follows. The apparatus 446 of this embodiment has a mounting assembly 454 and a carrier 448 which is movably mounted to the mounting assembly 454. At least the frame 456 of the mounting assembly 454 is adapted to remain stationary during operation of the apparatus 446, relative to the reactor tubes of a reactor (not shown).

A plurality of hollow rods 432a, 432b, 432c (only three of which are labeled in the figures) is mounted on the carrier 448, parallel to one another, and arranged in a configuration that matches a regular, repeated pattern formed by the exposed ends of the reactor tubes (not shown, but see, for instance, Figure 2 and associated text provided above). Each hollow rod 432a, 432b, 432c has a tip 434a, 434b, 334c for contacting and dislodging solid materials (not shown), and an axial lumen 444a, 444b, 444c for conveying dislodged solid materials. The size, shape and materials of construction for the hollow rods is unchanged from that which is described hereinabove in connection with more generic embodiments.

With continued reference to Figures 11 and 12, a transmission assembly is affixed to the mounting assembly 454 for applying a controlled axially-directed force (**S**) to the carrier 448, and is in communication with a power source, such as the motor 472 which is visible in Figure 12. In this embodiment, the transmission assembly includes various gears 474a, 474b, 476a, 480a, 480b (not all are shown in Figures 11 and 12) and chains (not shown in Figure 11), and the chains are in contact and communicate with one or more of the gears 474a, 474b, 476a, 480a, 480b and the carrier 448. The motor 472 provides power which is transmitted by the gears 474a, 474b, 476a, 480a, 480b and chains (not shown) to the carrier 448 for moving the carrier 448, between a withdrawn position and an inserted position (see generic embodiment in Figures 9 and 10), as well as to any one of a plurality of positions intermediate the withdrawn and inserted positions. In Figures 11 and 12, the carrier 448 and rods 432a, 432b, 432c are shown in an intermediate inserted position. The foregoing arrangement of apparatus is not particularly required, but will be familiar to persons of ordinary skill, and it is noted that any arrangement of apparatus which facilitates movement of the carrier 448 between a withdrawn position, an inserted position, and any one of a plurality of positions intermediate the withdrawn and inserted positions, is suitable.

The apparatus 446 of this embodiment also has a plurality of rotator assemblies 478a, 478b, 478c (only three of which are labeled in the figures) which are mounted on the carrier 448. Each rotator assembly 478a, 478b, 478c is in communication with a corresponding one of the hollow rods 432a, 432b, 432c, for engaging and rotating the corresponding hollow rod 432a, 432b, 432c independently of the others.

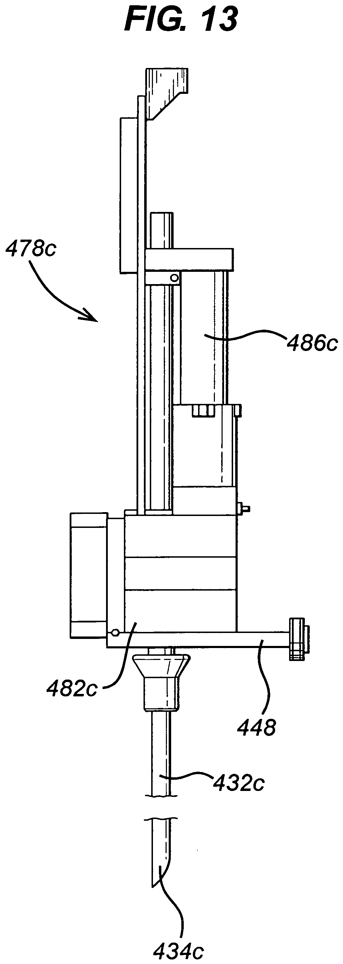

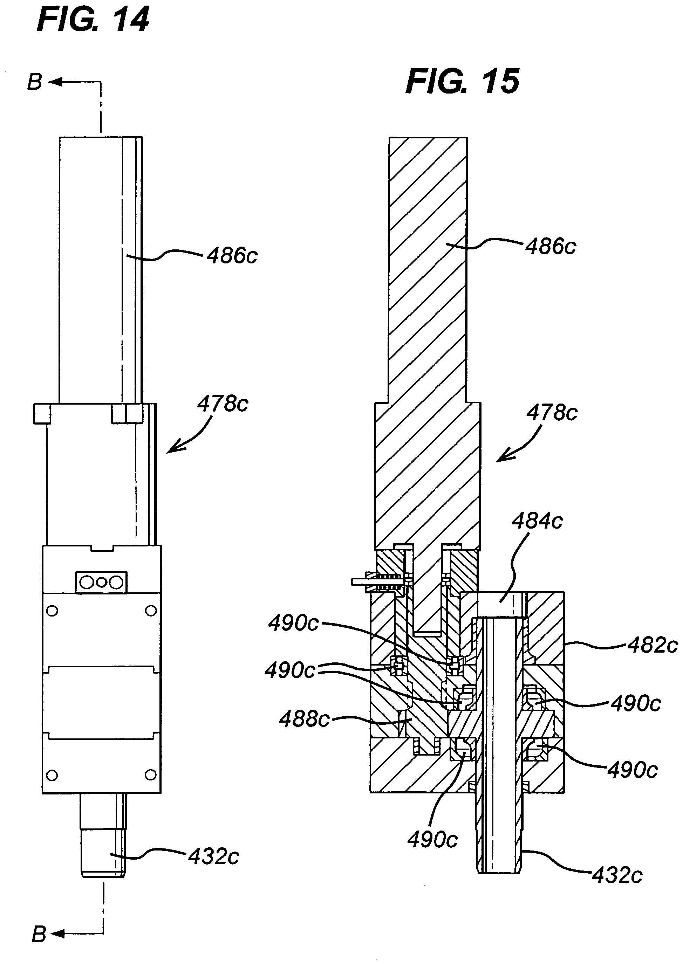

Figures 13, 14 and 15 provide left side, front, and right side cut-away views, respectively, of a typical one 478c of the rotator assembly 478a, 478b, 478c. The cut away view of Figure 15 is taken along line B-B in Figure 14 and looking in the direction of the arrows. More particularly, the rotator assembly 478c is mounted to a portion of the carrier 448 and is in communication with a corresponding hollow rod 432c. As shown in Figure 15, the rotator assembly 478c has a housing 482c with an opening 484c therethrough. The axial lumen 444c of the hollow rod 432c is inserted into the through-opening 484c which is sized and shaped to receive the axial lumen 444c in a rotatable and air-tight manner. Seals and bushings may be used, as known to persons of ordinary skill, to achieve an air-tight connection of the axial lumen 444c in the through-opening 484c. As best viewed in Figure 15, the rotator assembly 478c also has an air motor 486c and a drive shaft 488c which is positioned and oriented longitudinally parallel to the through-opening 484c. The rotator assembly 478c further includes a transmission device which, in this embodiment, comprises a plurality of bushings 490c disposed within the through-opening 484c and circumferentially about the drive shaft 488c to transfer rotational movement of the drive shaft 488c caused by the motor 486c, to the hollow rod 432c, thereby causing the hollow rod 432c to rotate, as desired.

The embodiment of the apparatus 346 shown in Figures 11 and 12 also includes a positioning assembly comprising tracks 492 and track wheels 494. A pair of tracks 492 is positioned and secured on the surface of the first perforated tube sheet of the reactor (not shown per se) and the track wheels 494 are mounted on the bottommost portion of the frame 456 of the mounting assembly 454. The tracks 492 are, of course, placed parallel to one another at a distance which is the same as the distance between the track wheels 494 on the frame 456 so that the wheels will contact and roll on the tracks, rendering the apparatus 446 longitudinally and controllably movable on the tube sheet (not shown).

When it becomes necessary to move the apparatus 446 beyond where the track 492 is located, the apparatus 446 may be lifted vertically, such as with a crane or other conventional means (not shown), to permit the tracks 492 to be relocated proximate reactor tubes still containing solid materials to be extracted. For example, where the reactor head is removed to provide access to the reactor tubes (not shown, but see, e.g., Figure 1A), and a large housing structure (not shown) is used to cover the entire reactor, the roof of the housing structure may be provided with conventional lifting means suitable for lifting and moving the apparatus 446. Persons of ordinary skill in the art are familiar with suitable conventional lifting means, which includes, without limitation, guide beams, pulleys, gears, chains, cables, motors, crane assemblies, and combinations thereof.

The apparatus 446 also has an anchor 496 mounted on the frame 456 for preventing unwanted linear movement along the tracks 492 during or in between operation of the apparatus 446. In this embodiment, the anchor 496 is simply a retractable post which is inserted into a reactor tube prior to operation of the apparatus 446 to anchor it in place on the tracks 492 relative to the reactor tubes (not shown).

An exhaust manifold 498 is also provided on the mounting assembly for receiving and consolidating flowing fluid streams carrying extracted solid materials from the reactor tubes and hollow rods 432a, 432b, 432c. Although not shown in Figures 11 and 12, as with the more generic embodiments described hereinabove, an aspirator, or vacuum source, may be connected in fluid communication with the manifold 498, such as with a flexible conduit, for providing a flowing fluid streams for extracting dislodged solid materials. Furthermore, the apparatus 446 may include one or more intermediate conduits fluidly connecting the manifold 498 with one or more of the hollow rods 432a, 432b, 432c, such as the conduit 499 shown in phantom in Figure 12. For example, without limitation, an intermediate conduit 499 may be provided to connect each hollow rod 432a, 432b, 432c to the manifold 498 (not shown per se). The apparatus 446 of the present invention may further include a separation apparatus (not shown) for separating the extracted solid materials from the flowing fluid stream, as well as a collection apparatus for collecting and holding the solid materials after separation, as described earlier.

## Claims

1. A method for minimizing damage to at least a portion of solid materials during dislodging and extraction of the solid materials from reactor tubes of a shell-and-tube reactor, wherein at least a portion of the solid materials remain structurally suitable for re-use after dislodging and extraction, wherein each reactor tube has an exposed end, said method comprising:
a) axially aligning a hollow rod, having a tip, with a corresponding reactor tube, and positioning the hollow rod such that the tip is proximate to the exposed end of the corresponding reactor tube;
b) rotating the hollow rod;
c) axially inserting the rotating hollow rod into the exposed end of the corresponding reactor tube so that the tip thereof is in physical contact with at least a portion of the solid materials;
d) dislodging at least a portion of the solid materials by applying a controlled axially-directed force to the rotating hollow rod and controllably pressing the tip of the rotating hollow rod against the solid materials, minimizing damage to at least a portion of the solid materials during dislodging, such that at least a portion of the solid materials remains structurally suitable for re-use after dislodging, wherein said dislodging step comprises monitoring and adjusting said rotating and said axially-directed force to minimize damage to at least a portion of the solid materials and ensure their structural suitability for re-use;
and
e) extracting at least a portion of the dislodged solid material from the corresponding reactor tube by aspirating the dislodged solid materials, in a flowing fluid stream, through the hollow rod.

2. The method of Claim 1, wherein the reactor tubes are oriented parallel to one another and the exposed ends of the reactor tubes form a regular, repeated pattern, and the hollow rod comprises a plurality of hollow rods, which are arranged parallel to one another and in a configuration that matches the regular, repeated pattern formed by the exposed ends, said positioning step a) further comprises aligning the tip of each of the plurality of hollow rods with the exposed end of a corresponding one of the reactor tubes; and said rotating step b) comprises rotating at least one of the plurality of hollow rods independently of the others.

3. The method of Claim 1, wherein at least a portion of said axially-directed force comprises a non-gravitational force provided by a drive device.

4. The method of Claim 1, further comprising separating the solid materials to accomplish at least one goal selected from the group consisting of: separating at least a portion of the solid materials from the flowing fluid stream, separating different types of solid materials from one another, separating different sizes of solid materials from one another, and separating solid materials having different compositions from one another.

5. The method of Claim 1, further comprising intentionally leaving a selected portion of the solid materials in the reactor tube after said dislodging and extracting.

6. The method of Claim 5, wherein the selected portion of the solid materials is left in the reactor tube by: selecting a halt position at which to halt axial movement of the hollow rod, monitoring the axial movement of the tip of the hollow rod, and halting the axial movement of the hollow rod when the tip is positioned at the halt position.

7. The method of Claim 6, wherein the types and locations of the solid materials in the reactor tubes is known, and said halt position is selected by determining an axial distance in the reactor tube, from the exposed end to a distance at which solid material, which is to remain in the reactor tube, is located.

8. The method of Claim 1, further comprising the step of placing indicators on the exposed end of each of the reactor tubes, according to a code, after at least one step of said method is performed for each reactor tube for enabling an operator to determine which step to perform next for each of the reactor tubes.

9. A device for minimizing damage to solid materials during dislodging and extraction of the solid materials from one or more reactor tubes having an exposed end connected to a tube sheet, of a shell-and-tube reactor, said device comprising:
a) a mounting assembly, at least a part of which is adapted to remain stationary relative to the reactor tubes during operation of said device;
b) a carrier movably mounted to said mounting assembly;
c) a hollow rod connected to said carrier and being sized and shaped for insertion into a corresponding reactor tube, said hollow rod having a tip for contacting and dislodging at least a portion of the solid materials, and an axial lumen for conveying at least a portion of the dislodged solid materials from the corresponding reactor tube;
d) a transmission assembly connected to said mounting assembly and in communication with a power source and with said carrier, for applying a controlled axially-directed force to said carrier and moving said carrier and said hollow rod connected thereto relative to the reactor tubes, between a withdrawn position, in which said tip of said hollow rod is positioned proximate to the exposed end of a corresponding one of the reactor tubes and externally to the corresponding reactor tube, and an inserted position, in which said hollow rod is inserted into the corresponding reactor tube, and wherein said hollow rod is moveable to any one of a plurality of positions intermediate said withdrawn and inserted positions;
and
e) a rotator assembly mounted to said carrier and being in communication with one or more of said hollow rod for engaging and rotating said hollow rod, wherein, when said carrier is in its inserted position and said tip of said rotating hollow rod contacts at least a portion of the solid materials in the corresponding reactor tube, said tip impacting and dislodging at least a portion of the solid materials while minimizing damage to the solid materials, at least a portion of which remain structurally suitable for re-use after extraction,
and further comprising means such that, during the dislodging step, the rotation of the hollow rod and application of the axially-directed force are monitored and adjusted to minimize damage to at least a portion of the solid materials and ensure their structural suitability for re-use.

10. The device of Claim 9, further comprising an aspirator connected in fluid communication with said axial lumen of said hollow rod for extracting the dislodged solid material from the corresponding reactor tube by providing a flowing fluid stream in which at least a portion of the dislodged solid material is entrained and conveyed out of the corresponding reactor tube and away from the reactor.

11. The device of Claim 9, wherein said at least one rotator assembly comprises a motor and said axially-directed force is supplied by said motor.

12. The device of Claim 9, further comprising a separation apparatus for achieving a goal, after extraction of the dislodged solids from the reactor tubes, selected from the group consisting of: separating the extracted solid materials from the fluid stream, separating different types of solid materials from one another, separating different sizes of solid materials from one another, and separating solid materials having different compositions from one another.

13. The device of Claim 9, wherein, when the reactor tubes are oriented parallel to one another and the exposed ends of the reactor tubes form a regular, repeated pattern, said hollow rod comprises a plurality of rods which are oriented parallel to one another and which are arranged in a configuration that matches the regular, repeated pattern of the reactor tubes.

14. The device of Claim 13, wherein said rotator assembly comprises a plurality of rotator assemblies, each of which engages and rotates a corresponding one or more of said plurality of hollow rods.

15. A method for tracking and communicating the status of an in-progress process comprising the method according to Claim 1, said in-progress process having at least two steps which are performed sequentially, wherein said method comprises:
(a) providing a code having a plurality of code members;
(b) associating a code member with each step of the in-progress process;
(c) providing a plurality of indicators each of which bears a code member and is sized and shaped to cooperate with an end of a corresponding tube to form a moisture-resistant seal therewith;
(d) communicating to operators which step has been most recently completed for each tube by positioning an indicator bearing the code member associated with the most recently completed step on the exposed end of the tube.

16. The method of Claim 15, wherein the plurality of code members is selected from the group consisting of: colors, markings, numbers, symbols, and combinations thereof.

## Patentansprüche

1. Ein Verfahren zur Verringerung von Schaden an mindestens einem Teil von Feststoffen während der Entfernung und Extraktion der Feststoffe aus Reaktorrohren eines Rohrbündelreaktors, wobei mindestens ein Teil der Feststoffe zur Wiederverwendung nach Entfernung und Extraktion strukturell geeignet verbleibt, wobei jedes Reaktorrohr ein freigelegtes Ende aufweist, wobei das Verfahren Folgendes beinhaltet:
a) axiales Ausrichten eines Hohlstabs, der eine Spitze aufweist, nach einem entsprechenden Reaktorrohr und Positionieren des Hohlstabs derart, dass sich die Spitze nahe dem freigelegten Ende des entsprechenden Reaktorrohrs befindet;
b) Drehen des Hohlstabs;
c) axiales Einführen des sich drehenden Hohlstabs in das freigelegte Ende des entsprechenden Reaktorrohrs, so dass sich die Spitze von diesem in physikalischem Kontakt mit mindestens einem Teil der Feststoffe befindet;
d) Entfernen von mindestens einem Teil der Feststoffe durch das Aufbringen einer kontrollierten axial gerichteten Kraft auf den sich drehenden Hohlstab und kontrollierbares Drücken der Spitze des sich drehenden Hohlstabs gegen die Feststoffe, Verringern von Schaden an mindestens einem Teil der Feststoffe während der Entfernung, sodass mindestens ein Teil der Feststoffe zur Wiederverwendung nach der Entfernung strukturell geeignet verbleibt, wobei der Entfernungsschritt das Überwachen und Anpassen der sich drehenden und der axial gerichteten Kraft beinhaltet, um Schaden an mindestens einem Teil der Feststoffe zu verringern und ihre strukturelle Eignung zur Wiederverwendung sicherzustellen;
und
e) Extrahieren mindestens eines Teils der entfernten Feststoffe aus dem entsprechenden Reaktorrohr durch das Absaugen der entfernten Feststoffe in einem fließenden Flüssigkeitsstrom durch den Hohlstab.

2. Verfahren gemäß Anspruch 1, wobei die Reaktorrohre parallel zueinander orientiert sind und die freigelegten Enden der Reaktorohre ein regelmäßiges, wiederholtes Muster bilden und der Hohlstab eine Vielzahl von Hohlstäben beinhaltet, die parallel zueinander und in einer Konfiguration, die zu dem durch die freigeigten Enden gebildeten regelmäßigen, wiederholten Muster passt, angeordnet sind, wobei der Positionierungsschritt a) ferner das Ausrichten der Spitze jedes der Vielzahl von Hohlstäben nach dem freigelegten Ende einem entsprechenden der Reaktorrohre beinhaltet und der Drehschritt b) das Drehen mindestens eines der Vielzahl von Hohlstäben unabhängig von den anderen beinhaltet.

3. Verfahren gemäß Anspruch 1, wobei mindestens ein Teil der axial gerichteten Kraft eine Nicht-Gravitationskraft, bereitgestellt durch eine Antriebsvorrichtung, beinhaltet.

4. Verfahren gemäß Anspruch 1, das ferner das Trennen der Feststoffe beinhaltet, um mindestens eines der Ziele zu erreichen, ausgewählt aus der Gruppe, die aus Folgendem besteht: Trennen mindestens eines Teils der Feststoffe von dem fließenden Flüssigkeitsstrom, Trennen unterschiedlicher Typen von Feststoffen voneinander, Trennen unterschiedlicher Größen von Feststoffen voneinander und Trennen von Feststoffen, die unterschiedliche Zusammensetzungen aufweisen, voneinander.

5. Verfahren gemäß Anspruch 1, das ferner das vorsätzliche Belassen eines ausgewählten Teils der Feststoffe in dem Reaktorrohr nach der Entfernung und Extraktion beinhaltet.

6. Verfahren gemäß Anspruch 5, wobei der ausgewählte Teil der Feststoffe durch Folgendes in dem Reaktorrohr belassen wird: Auswählen einer Blockierposition, an der die axiale Bewegung des Hohlstabs blockiert werden soll, Überwachen der axialen Bewegung der Spitze des Hohlstabs und Blockieren der axialen Bewegung des Hohlstabs, wenn die Spitze an der Blockierposition positioniert ist.

7. Verfahren gemäß Anspruch 6, wobei die Typen und Standorte der Feststoffe in den Reaktorrohren bekannt sind und die Blockierposition durch das Bestimmen eines axialen Abstands in dem Reaktorrohr ausgewählt wird, von dem freigelegten Ende zu einem Abstand, an dem sich Feststoffe, die in dem Reaktorrohr verbleiben sollen, befinden.

8. Verfahren gemäß Anspruch 1, das ferner den Schritt des Platzierens von Indikatoren auf dem freigelegten Ende jedes der Reaktorrohre gemäß einem Code beinhaltet, nachdem mindestens ein Schritt des Verfahrens für jedes Reaktorrohr durchgeführt ist, um es einem Bediener zu ermöglichen, zu bestimmen, welcher Schritt als nächstes für jedes der Reaktorrohre durchgeführt werden soll.

9. Eine Vorrichtung zur Verringerung von Schaden an Feststoffen während der Entfernung und Extraktion der Feststoffe aus einem oder mehreren Reaktorrohren, die ein freigelegtes Ende aufweisen, das mit einem Rohrboden eines Rohrbündelreaktors verbunden ist, wobei die Vorrichtung Folgendes beinhaltet:
a) eine Montageanordnung, bei der mindestens ein Teil angepasst ist, um während des Betriebs der Vorrichtung relativ zu den Reaktorrohren ortsfest zu verbleiben;
b) einen Träger, der beweglich an der Montageanordnung montiert ist;
c) einen Hohlstab, der mit dem Träger verbunden ist und zum Einführen in ein entsprechendes Reaktorrohr bemessen und geformt ist, wobei der Hohlstab eine Spitze zum Kontaktieren und Entfernen mindestens eines Teils der Feststoffe und ein axiales Lumen zum Befördern mindestens eines Teils der entfernten Feststoffe aus dem entsprechenden Reaktorrohr aufweist;
d) eine Übertragungsanordnung, die mit der Montageanordnung verbunden ist und sich in Kommunikation mit einer Leistungsquelle und mit dem Träger befindet, zum Aufbringen einer kontrollierten axial gerichteten Kraft auf den Träger und Bewegen des Trägers und des damit verbundenen Hohlstabs relativ zu den Reaktorrohren zwischen einer ausgezogenen Position, in der die Spitze des Hohlstabs nahe dem freigelegten Ende einem entsprechenden der Reaktorrohre und extern zu dem entsprechenden Reaktorrohr positioniert ist, und einer eingeführten Position, in der der Hohlstab in das entsprechende Reaktorrohr eingeführt ist, und wobei der Hohlstab in jede beliebige einer Vielzahl von Positionen zwischen der ausgezogenen und der eingeführten Position bewegbar ist;
und
e) eine Rotatoranordnung, die an dem Träger montiert ist und sich in Kommunikation mit einem oder mehreren des Hohlstabs zum Eingriff mit und Drehen des Hohlstabs befindet, wobei, wenn sich der Träger in seiner eingeführten Position befindet und die Spitze des sich drehenden Hohlstabs mindestens einen Teil der Feststoffe in dem entsprechenden Reaktorrohr kontaktiert, die Spitze mindestens einen Teil der Feststoffe beeinflusst und entfernt, während Schaden an den Feststoffen verringert wird, von denen mindestens ein Teil zur Wiederverwendung nach der Extraktion strukturell geeignet verbleibt;
und ferner beinhaltend Mittel, so dass, während des Entfernungsschritts, die Drehung des Hohlstabs und das Aufbringen der axial gerichteten Kraft überwacht und angepasst werden, um Schaden an mindestens einem Teil der Feststoffe zu verringern und ihre strukturelle Eignung zur Wiederverwendung sicherzustellen.

10. Vorrichtung gemäß Anspruch 9, die ferner einen Sauger beinhaltet, der in Fluidkommunikation mit dem axialen Lumen des Hohlstabs zum Extrahieren der entfernten Feststoffe aus dem entsprechenden Reaktorrohr durch das Bereitstellen eines fließenden Flüssigkeitsstroms verbunden ist, in dem mindestens ein Teil der entfernten Feststoffe mitgerissen wird und aus dem entsprechenden Reaktorrohr und weg von dem Reaktor befördert wird.

11. Vorrichtung gemäß Anspruch 9, wobei die mindestens eine Rotatoranordnung einen Motor beinhaltet und die axial gerichtete Kraft durch den Motor geliefert wird.

12. Vorrichtung gemäß Anspruch 9, die ferner eine Trennungseinrichtung zum Erreichen eines Ziels beinhaltet, nach der Extraktion der entfernten Feststoffe aus den Reaktorrohren, ausgewählt aus der Gruppe, die aus Folgendem besteht: Trennen der extrahierten Feststoffe von dem Flüssigkeitsstrom, Trennen unterschiedlicher Typen von Feststoffen voneinander, Trennen unterschiedlicher Größen von Feststoffen voneinander, und Trennen von Feststoffen, die unterschiedliche Zusammensetzungen aufweisen, voneinander.

13. Vorrichtung gemäß Anspruch 9, wobei, wenn die Reaktorrohre parallel zueinander orientiert sind und die freigelegten Enden der Reaktorrohre ein regelmäßiges, wiederholtes Muster bilden, der Hohlstab eine Vielzahl von Stäben beinhaltet, die parallel zueinander orientiert sind und in einer Konfiguration, die zu dem regelmäßigen, wiederholten Muster der Reaktorrohre passt, angeordnet sind.

14. Vorrichtung gemäß Anspruch 13, wobei die Rotatoranordnung eine Vielzahl von Rotatoranordnungen beinhaltet, von denen jede in einen entsprechenden einen oder mehrere der Vielzahl von Hohlstäben eingreift und diesen dreht.

15. Ein Verfahren zur Verfolgung und zum Kommunizieren des Status eines Vorgangs im Ablauf, das das Verfahren gemäß Anspruch 1 beinhaltet, wobei der Vorgang im Ablauf mindestens zwei Schritte aufweist, die sequentiell durchgeführt werden, wobei das Verfahren Folgendes beinhaltet:
(a) Bereitstellen eines Codes, der eine Vielzahl von Codeeinheiten aufweist;
(b) Assoziieren einer Codeeinheit mit jedem Schritt des Vorgangs im Ablauf;
(c) Bereitstellen einer Vielzahl von Indikatoren, von denen jeder eine Codeeinheit trägt und bemessen und geformt ist, um mit einem Ende eines entsprechenden Rohrs zu kooperieren, um eine feuchtigkeitsbeständige Dichtung damit zu bilden;
(d) Kommunizieren an Bediener, welcher Schritt als letztes an jedem Rohr vollzogen worden ist, durch das Positionieren eines Indikators, der die Codeeinheit trägt, die mit dem als letztes vollzogenen Schritt assoziiert ist, auf dem freigelegten Ende des Rohrs.

16. Verfahren gemäß Anspruch 15, wobei die Vielzahl von Codeeinheiten aus der Gruppe ausgewählt ist, die aus Folgendem besteht: Farben, Markieriungen, Zahlen, Symbolen und Kombinationen davon.

## Revendications

1. Un procédé pour minimiser l'endommagement sur au moins une portion de matières solides pendant le délogement et l'extraction des matières solides de tubes de réacteur d'un réacteur tubulaire, où au moins une portion des matières solides demeure structurellement apte à être réutilisée une fois délogée et extraite, où chaque tube de réacteur présente une extrémité apparente, ledit procédé comprenant :
a) l'alignement axial d'une tige creuse, présentant un bout, avec un tube de réacteur correspondant, et le positionnement de la tige creuse de telle sorte que le bout se trouve à proximité de l'extrémité apparente du tube de réacteur correspondant ;
b) la mise en rotation de la tige creuse ;
c) l'insertion axiale de la tige creuse en rotation dans l'extrémité apparente du tube de réacteur correspondant de sorte que le bout de celle-ci se trouve en contact physique avec au moins une portion des matières solides ;
d) le délogement d'au moins une portion des matières solides en appliquant une force dirigée axialement contrôlée sur la tige creuse en rotation et en appuyant de manière contrôlable le bout de la tige creuse en rotation contre les matières solides, minimisant l'endommagement sur au moins une portion des matières solides pendant le délogement, de telle sorte qu'au moins une portion des matières solides demeure structurellement apte à être réutilisée une fois délogée, où ladite étape de délogement comprend le fait de surveiller et d'ajuster ladite mise en rotation et ladite force dirigée axialement afin de minimiser l'endommagement sur au moins une portion des matières solides et garantir leur aptitude structurelle à être réutilisées ;
et
e) l'extraction d'au moins une portion de la matière solide délogée du tube de réacteur correspondant en aspirant les matières solides délogées, dans un flux de fluide en écoulement, à travers la tige creuse.

2. Le procédé de la revendication 1, où les tubes de réacteur sont orientés parallèles les uns aux autres et les extrémités apparentes des tubes de réacteur forment un motif régulier, répété, et la tige creuse comprend une pluralité de tiges creuses, lesquelles sont agencées parallèles les unes aux autres et dans une configuration qui coïncide avec le motif régulier, répété formé par les extrémités apparentes, ladite étape de positionnement a) comprend en sus l'alignement du bout de chaque tige parmi la pluralité de tiges creuses avec l'extrémité apparente d'un tube correspondant parmi les tubes de réacteur ; et ladite étape de mise en rotation b) comprend la mise en rotation d'au moins une tige parmi la pluralité de tiges creuses indépendamment des autres.

3. Le procédé de la revendication 1, où au moins une portion de ladite force dirigée axialement comprend une force non gravitationnelle fournie par un dispositif de commande.

4. Le procédé de la revendication 1, comprenant en sus la séparation des matières solides afin d'accomplir au moins un objectif sélectionné dans le groupe constitué de : la séparation d'au moins une portion des matières solides du flux de fluide en écoulement, la séparation de différents types de matières solides les uns des autres, la séparation de différentes tailles de matières solides les unes des autres, et la séparation de matières solides présentant différentes compositions les unes des autres.

5. Le procédé de la revendication 1, comprenant en sus le fait de laisser intentionnellement une portion sélectionnée des matières solides dans le tube de réacteur après lesdits délogement et extraction.

6. Le procédé de la revendication 5, où la portion sélectionnée des matières solides est laissée dans le tube de réacteur : en sélectionnant une position d'arrêt au niveau de laquelle arrêter le déplacement axial de la tige creuse, en surveillant le déplacement axial du bout de la tige creuse, et en arrêtant le déplacement axial de la tige creuse lorsque le bout est positionné au niveau de la position d'arrêt.

7. Le procédé de la revendication 6, où les types et localisations des matières solides dans les tubes de réacteur sont connus, et ladite position d'arrêt est sélectionnée en déterminant une distance axiale dans le tube de réacteur, de l'extrémité apparente à une distance à laquelle de la matière solide, qui doit demeurer dans le tube de réacteur, est localisée.

8. Le procédé de la revendication 1, comprenant en sus l'étape de placement d'indicateurs sur l'extrémité apparente de chacun des tubes de réacteur, selon un code, après la réalisation d'au moins une étape dudit procédé pour chaque tube de réacteur pour permettre à un opérateur de déterminer quelle étape réaliser ensuite pour chacun des tubes de réacteur.

9. Un dispositif pour minimiser l'endommagement sur des matières solides pendant le délogement et l'extraction des matières solides d'un ou de plusieurs tubes de réacteur présentant une extrémité apparente raccordée à une plaque tubulaire, d'un réacteur tubulaire, ledit dispositif comprenant :
a) un ensemble de montage, dont au moins une partie est conçue pour demeurer stationnaire relativement aux tubes de réacteur pendant le fonctionnement dudit dispositif ;
b) un élément porteur monté de manière mobile sur ledit ensemble de montage ;
c) une tige creuse raccordée audit élément porteur et qui est dimensionnée et façonnée pour être insérée dans un tube de réacteur correspondant, ladite tige creuse présentant un bout pour entrer au contact d'au moins une portion des matières solides et les déloger, et une lumière axiale pour le transport d'au moins une portion des matières solides délogées du tube de réacteur correspondant ;
d) un ensemble de transmission raccordé audit ensemble de montage et en communication avec une source d'alimentation et avec ledit élément porteur, pour appliquer une force dirigée axialement contrôlée sur ledit élément porteur et déplacer ledit élément porteur et ladite tige creuse raccordée à celui-ci relativement aux tubes de réacteur, entre une position retirée, dans laquelle ledit bout de ladite tige creuse est positionné à proximité de l'extrémité apparente d'un tube correspondant parmi les tubes de réacteur et extérieurement au tube de réacteur correspondant, et une position insérée, dans laquelle ladite tige creuse est insérée dans le tube de réacteur correspondant, et où ladite tige creuse peut être déplacée à n'importe quelle position parmi une pluralité de positions intermédiaires entre lesdites positions retirée et insérée ;
et
e) un ensemble rotateur monté sur ledit élément porteur et qui est en communication avec une ou plusieurs tiges de ladite tige creuse pour se mettre en prise avec ladite tige creuse et la mettre en rotation, où, lorsque ledit élément porteur est dans sa position insérée et que ledit bout de ladite tige creuse en rotation entre au contact d'au moins une portion des matières solides dans le tube de réacteur correspondant, ledit bout frappe et déloge au moins une portion des matières solides tout en minimisant l'endommagement sur les matières solides, dont au moins une portion demeure structurellement apte à être réutilisée une fois extraite,
et comprenant en sus un moyen de telle sorte que, pendant l'étape de délogement, la rotation de la tige creuse et l'application de la force dirigée axialement sont surveillées et ajustées afin de minimiser l'endommagement sur au moins une portion des matières solides et garantir leur aptitude structurelle à être réutilisées.

10. Le dispositif de la revendication 9, comprenant en sus un aspirateur raccordé en communication fluidique avec ladite lumière axiale de ladite tige creuse pour extraire la matière solide délogée du tube de réacteur correspondant en fournissant un flux de fluide en écoulement dans lequel au moins une portion de la matière solide délogée est entraînée et transportée hors du tube de réacteur correspondant et à distance du réacteur.

11. Le dispositif de la revendication 9, où ledit au moins un ensemble rotateur comprend un moteur et ladite force dirigée axialement est fournie par ledit moteur.

12. Le dispositif de la revendication 9, comprenant en sus un appareil de séparation pour parvenir à un objectif, après extraction des solides délogés des tubes de réacteur, sélectionné dans le groupe constitué de : la séparation des matières solides extraites du flux de fluide, la séparation de différents types de matières solides les uns des autres, la séparation de différentes tailles de matières solides les unes des autres, et la séparation de matières solides présentant différentes compositions les unes des autres.

13. Le dispositif de la revendication 9, où, lorsque les tubes de réacteur sont orientés parallèles les uns aux autres et que les extrémités apparentes des tubes de réacteur forment un motif régulier, répété, ladite tige creuse comprend une pluralité de tiges qui sont orientées parallèles les unes aux autres et qui sont agencées dans une configuration qui coïncide avec le motif régulier, répété, des tubes de réacteur.

14. Le dispositif de la revendication 13, où ledit ensemble rotateur comprend une pluralité d'ensembles rotateurs, chacun desquels se met en prise avec une ou plusieurs tiges correspondantes de ladite pluralité de tiges creuses et les met en rotation.

15. Un procédé pour suivre et communiquer le statut d'un processus en cours comprenant le procédé selon la revendication 1, ledit processus en cours présentant au moins deux étapes qui sont réalisées de manière séquentielle, où ledit procédé comprend :
(a) la fourniture d'un code présentant une pluralité d'éléments de code ;
(b) l'association d'un élément de code avec chaque étape du processus en cours ;
(c) la fourniture d'une pluralité d'indicateurs, chacun desquels arbore un élément de code et est dimensionné et façonné afin de coopérer avec une extrémité d'un tube correspondant pour former un joint résistant à l'humidité avec celle-ci ;
(d) la communication à des opérateurs de l'étape qui a été exécutée le plus récemment pour chaque tube en positionnant un indicateur arborant l'élément de code associé à l'étape exécutée le plus récemment sur l'extrémité apparente du tube.

16. Le procédé de la revendication 15, où la pluralité d'éléments de code est sélectionnée dans le groupe constitué : de couleurs, de marquages, de numéros, de symboles, et de combinaisons de ceux-ci.
